# EUROPEAN PATENT APPLICATION

(11) **EP 4 181 469 A1**
(43) Date of publication of application: **17.05.2023**
(21) Application number: 21845153.2
(22) Date of filing: 22.07.2021
(51) Int. Cl.: H04L 12/00

(54) **METHOD, DEVICE, AND SYSTEM FOR CONNECTIVITY VERIFICATION OF P2MP TREE**

(30) Priority: 24.07.2020 CN 202010725197; 27.09.2020 CN 202011035873
(71) Applicant: Huawei Technologies Co., Ltd., Shenzhen, Guangdong 518129 (CN)
(72) Inventor: XIE, Jingrong, Shenzhen, Guangdong 518129 (CN); GENG, Xuesong, Shenzhen, Guangdong 518129 (CN); DUAN, Fanghong, Shenzhen, Guangdong 518129 (CN)
(74) Representative: Gill Jennings & Every LLP
(86) International application number: PCT/CN2021/107848
(87) International publication number: WO 2022/017460

(57) **Abstract**

This application provides a P2MP tree connectivity detection method, a device, and a system. The method is applied to SR domain. The SR domain includes a P2MP tree. The P2MP tree includes a first node. The first node is a root node or an intermediate replication node of the P2MP tree. The method includes: The first node determines a first next-hop node of the first node based on replication branch information; and the first node sends a first request message to the first next-hop node. The first request message includes a segment identifier SID of the first next-hop node. The first request message includes a first identifier. The first identifier indicates that the first request message is for connectivity detection.

## Description

This application claims priority to Chinese Patent Application No. CN202010725197.0, filed with the China National Intellectual Property Administration on July 24, 2020 and entitled "PACKET DETECTION METHOD, DEVICE, AND SYSTEM", and claims priority to Chinese Patent Application No. CN202011035873.8, filed with the China National Intellectual Property Administration on September 27, 2020 and entitled "P2MP TREE CONNECTIVITY DETECTION METHOD, DEVICE, AND SYSTEM". The foregoing Chinese patent applications are incorporated herein by reference in their entireties

### TECHNICAL FIELD

This application relates to the communications field, and in particular, to a point-to-multipoint (point-to-multipoint, P2MP) tree connectivity detection method, a device, and a system.

### BACKGROUND

A replication segment (Replication Segment) provides a construction module for a P2MP service. For example, a P2MP tree is constructed by concatenating replication segments on a node in segment routing domain (Segment Routing Domain). An ingress node, as a root node of the P2MP tree, replicates a packet and sends the packet to an egress node through one or more intermediate replication nodes, so that point-to-multipoint transmission of the packet can be implemented by the P2MP tree in SR domain. Different from a conventional internet protocol (Internet Protocol, IP) multicast technology, this technology does not need to use a multicast group address as a destination address of the packet and establish a multicast forwarding tree and a multicast forwarding entry by using protocol independent multicast (Protocol Independent Multicast, PIM). Therefore, network load can be reduced, and packet forwarding efficiency can be improved.

However, currently, there is no method for detecting connectivity of a P2MP tree in SR domain, and connectivity detection on the P2MP tree and a replication segment path associated with the P2MP tree cannot be implemented.

### SUMMARY

This application provides a P2MP tree connectivity detection method, a device, and a system, to implement connectivity detection on a P2MP tree and a replication segment path associated with the P2MP tree.

According to a first aspect, this application provides a P2MP tree connectivity detection method. The method is applied to SR domain. The SR domain includes a P2MP tree. It may be understood that the P2MP tree is constructed by concatenating replication segments on nodes in SR domain. The P2MP tree includes a first node. The first node is a root node or an intermediate replication node of the P2MP tree. The method includes: The first node determines a first next-hop node of the first node based on replication branch information. The first node sends a first request message to the first next-hop node, where the first request message includes a segment identifier (Segment Identifier, SID) of the first next-hop node, the first request message includes a first identifier, and the first identifier indicates that the first request message is for connectivity detection. Alternatively, it may be understood as that the first identifier indicates that the first request message is for P2MP tree fault detection or 2PMP tree connectivity verification.

In the foregoing method, the first request message for connectivity detection is sent in the P2MP tree, so that an implementation of connectivity detection on the P2MP tree in SR domain is provided, to implement fault detection on the P2MP tree and a replication segment path associated with the P2MP tree.

In a possible implementation, when the first node is a root node of the P2MP tree, and the first next-hop node is a leaf node of the P2MP tree, in one case, in response to that the first node receives a first response message sent by the first next-hop node, the first node determines that a path from the first node to the first next-hop node is connected, where the first response message is a response message for the first request message; or in another case, in response to that the first node does not receive a response message in response to the first request message, the first node determines that a path from the first node to the first next-hop node is disconnected.

It should be understood that, if the path in the P2MP tree is faulty, the first request message sent by the root node cannot reach the leaf node. Therefore, the root node also cannot receive the response message sent by the leaf node. In this case, the root node may determine that the path to the leaf node is disconnected. If the path in the P2MP tree is connected and not faulty, the first request message is forwarded to the leaf node, the leaf node sends the response message to the root node based on the first request message, and the root node determines, based on the received response message, that the path to the leaf node is connected.

In a possible implementation, when the first node is a root node of the P2MP tree, and the first next-hop node is an intermediate replication node of the P2MP tree, in one case, in response to that the first node receives a second response message that is sent by a leaf node on a path passing through the first next-hop node, the first node determines that the path that is from the first node to the leaf node and that passes through the first next-hop node is connected, where the second response message is a response message for the first request message; or in another case, in response to that the first node does not receive a response message that is sent by a leaf node on a path passing through the first next-hop node and that is in response to the first request message, the first node determines that the path from the first node to the leaf node is disconnected.

In a possible implementation, the replication branch information includes a path from the first node to a downstream node, and the first next-hop node is a node on the path. That the first node determines a first next-hop node of the first node based on replication branch information includes: The first node determines the first next-hop node based on an identifier of the path.

In the foregoing method, an explicit path from the first node to the downstream node is specified in an SR policy, in other words, the replication branch information includes the path from the first node to the downstream node, and the first next-hop node is a node on the path. It should be understood that the first node determines the first next-hop node based on the identifier of the path to the downstream node.

In a possible implementation, the replication branch information includes a segment identifier SID of a downstream node of the first node, and the SID includes the SID of the first next-hop node; and that the first node determines a first next-hop node of the first node based on replication branch information includes: The first node determines the SID of the first next-hop node based on the SID of the downstream node. For example, the downstream node of the first node may be represented not only by a node SID of the node, but also by an adjacency SID, or by a SID list.

In the foregoing method, the replication branch information includes the segment identifier SID of the downstream node of the first node, and the SID includes the SID of the first next-hop node. It should be understood that the first node determines the SID of the first next-hop node based on the SID of the downstream node.

In a possible implementation, when a SID in the SID is a segment routing over internet protocol version 6 (Internet Protocol version 6, IPv6) segment identifier (Segment Routing over IPv6 Segment Identifier, SRv6 SID), the SID of the first next-hop node includes an IPv6 address of the first next-hop node.

In a possible implementation, the first node may determine a plurality of next-hop nodes based on the replication branch information, for example, determine two next-hop nodes, which are referred to as the first next-hop node and a second next-hop node. The first node determines the first next-hop node and the second next-hop node based on the replication branch information. The first node sends a second request message to the second next-hop node, where the second request message includes a SID of the second next-hop node, and the second request message includes the first identifier.

The foregoing method may be applied to a scenario in which next-hop nodes of the first node are a plurality of intermediate replication nodes or a plurality of leaf nodes.

In a possible implementation, the first identifier is for identifying that the first request message is an operation, administration and maintenance (operation, administration and maintenance, OAM) packet. For example, the first message is an echo request (Echo Request) packet.

In a possible implementation, the first identifier is a user datagram protocol (User Datagram Protocol, UDP) port number, for example, a UDP destination port number carried in the first request message.

In a possible implementation, the first request message further includes an address of the root node of the P2MP tree, and the address of the root node is for indicating the leaf node of the P2MP tree to send, based on the address of the root node, the response message in response to the first request message.

In a possible implementation, the first request message includes a second identifier, and the second identifier is for identifying the P2MP tree.

In a possible implementation, the second identifier is the address of the root node of the P2MP tree or one integer value, or the second identifier may be a combination of the address of the root node of the P2MP tree and one integer value. In an example, the integer value may be a Replication-ID of a replication segment. Different P2MP trees of a same root node and different P2MP trees of different root nodes may be identified by globally unique Replication-IDs. For example, values of global Replication-IDs respectively corresponding to two P2MP trees whose root nodes are A are 1 and 2 respectively, and values of global Replication-IDs respectively corresponding to three P2MP trees whose root nodes are B are 3, 4, and 5 respectively. In another example, the value may be a tree identifier (Tree identifier, Tree ID) of the P2MP tree, and the P2MP tree is identified by the address of the root node and the Tree ID together. For example, a first P2MP tree whose root node is A is identified by <Root=A, Tree ID=1>, and a second P2MP tree whose root node is B is identified by <Root=B, Tree ID=1>. It should be understood that one P2MP tree is identified by a Tree ID and a root node together. The second identifier may further be used by the leaf node to verify validity of the first request message.

In a possible implementation, the first request message includes time to live (time to live, TTL) or a hop limit (Hop Limit, HL), and values of the TTL and the HL are natural numbers. For example, the root node sets a value of the TTL to 255 and includes the value of the TTL in the first request message, so that the first request message is sent to the leaf node.

In the foregoing method, the root node of the P2MP tree may not only perform connectivity detection on the P2MP by setting a value of the TTL or the HL, but also perform multi-round detection to further detect a fault occurrence location.

According to a second aspect, this application provides a P2MP tree connectivity detection method. The method is applied to SR domain. The SR domain includes a P2MP tree. It may be understood that the P2MP tree is constructed by concatenating replication segments on nodes in SR domain. The P2MP tree includes a leaf node. The method includes: The leaf node receives a first request message, where the first request message includes an address of a root node of the P2MP tree and a first identifier, and the first identifier indicates that the first request message is for connectivity detection. The leaf node sends a first response message to the root node based on the address of the root node.

In the foregoing method, the leaf node of the P2MP tree sends the response message in respond to the first request message, so that an implementation of connectivity detection on the P2MP tree in SR domain is provided, to implement connectivity detection on the P2MP tree and a replication segment path associated with the P2MP tree.

In a possible implementation, the first identifier is for identifying that the first request packet is an operation, administration and maintenance OAM packet. For example, the first response message is an echo response (Echo Request) packet.

In a possible implementation, the first identifier is a user datagram protocol UDP port number, for example, a UDP destination port number.

In a possible implementation, before that the leaf node sends a first response message to the root node, and after the first request message is received, the method further includes: The leaf node verifies validity of the first request message based on a second identifier. The leaf node sends, in response to that validity verification on the second identifier succeeds, the first response message to the root node.

In the foregoing method, an implementation of verifying the validity of the first request message is provided, so that the leaf node sends the response message to the root node after verifying the validity of the first request message, to improve verification reliability and security.

In a possible implementation, the second identifier is the address of the root node of the P2MP tree and/or one integer value. In an example, the second identifier is the address of the root node of the P2MP tree. In another example, the second identifier is one integer value. In still another example, the second identifier is a combination of the address of the root node of the P2MP tree and one integer value. For example, the integer value is a Replication-ID of a replication segment. Different P2MP trees of a same root node and different P2MP trees of different root nodes may be identified by globally unique Replication-IDs. For example, values of global Replication-IDs respectively corresponding to two P2MP trees whose root nodes are A are 1 and 2 respectively, and values of global Replication-IDs respectively corresponding to three P2MP trees whose root nodes are B are 3, 4, and 5 respectively. Alternatively, the value is a tree identifier (Tree identifier, Tree ID) of the P2MP tree, and the P2MP tree is identified by the address of the root node and the Tree ID together. For example, a first P2MP tree whose root node is A is identified by <Root=A, Tree ID=1>, and a second P2MP tree whose root node is B is identified by <Root=B, Tree ID=1>. It should be understood that one P2MP tree may be identified by a Tree ID and a root node together. The second identifier may be used by the leaf node to verify validity of the first request message.

In a possible implementation, that the leaf node verifies validity of the first request message based on a second identifier includes: The leaf node verifies the validity of the first request message based on the second identifier carried in the first request message. That the validity verification on the second identifier succeeds includes: The leaf node determines that information about a control plane corresponding to the P2MP tree is consistent with the second identifier.

In the foregoing method, the validity of the first request message can be verified by aligning the information about the control plane corresponding to the P2MP tree with the second identifier on a forwarding plane.

In a possible implementation, the address of the root node is an IPv6 address.

In a possible implementation, the first request message includes time to live TTL or a hop limit HL, and values of the TTL and the HL are natural numbers.

According to a third aspect, a point-to-multipoint P2MP tree connectivity detection method is provided. The method is applied to SR domain. The SR domain includes a P2MP tree. It may be understood that the P2MP tree is constructed by concatenating replication segments on nodes in SR domain. A first node is a root node of the P2MP tree. The method includes: The first node sends a first request message to a first leaf node of the P2MP tree based on replication branch information, where the first request message includes a SID of a next-hop node. In response to that the first node receives a first response message sent by the leaf, the first node determines that a path from the first node to the first leaf node is connected, where the first response message is a response message for the first request message; or in response to that the first node does not receive a response packet in response to the first request message, the first node determines that a path from the first node to the leaf node is disconnected.

In a possible implementation, the replication branch information includes a path from the first node to a downstream node of the P2MP tree. The first node determines the next-hop node based on an identifier of the path, and sends the first request message to the first leaf node of the P2MP tree.

In a possible implementation, the replication branch information includes a segment identifier SID of a downstream node of the first node in the P2MP tree. The first node determines the SID of the next-hop node based on the SID of the downstream node until the first request message is sent to the first leaf node of the P2MP tree. For example, the downstream node of the first node may be represented not only by a node SID of the node, but also by an adjacency SID, or by a SID list.

In a possible implementation, when a SID in the SID is an SRv6 SID, the SID of the next-hop node includes an IPv6 address of the next-hop node.

In a possible implementation, the first request message carries a first identifier. The first identifier is for identifying that the first request message is an OAM packet. For example, the first message is an echo request (Echo Request) packet.

In a possible implementation, the first identifier is a user datagram protocol (User Datagram Protocol, UDP) port number, for example, a UDP destination port number carried in the first request message.

In a possible implementation, the first request message further includes an address of the root node of the P2MP tree, and the address of the root node is for indicating the leaf node of the P2MP tree to send, based on the address of the root node, the response message in response to the first request message.

In a possible implementation, the first request message includes a second identifier, and the second identifier is for identifying the P2MP tree.

In a possible implementation, the second identifier is the address of the root node of the P2MP tree and/or one integer value. In an example, the second identifier is the address of the root node of the P2MP tree. In another example, the second identifier is one integer value. In still another example, the second identifier is a combination of the address of the root node of the P2MP tree and one integer value. For example, the integer value is a Replication-ID of a replication segment. Different P2MP trees of a same root node and different P2MP trees of different root nodes may be identified by globally unique Replication-IDs. For example, values of global Replication-IDs respectively corresponding to two P2MP trees whose root nodes are A are 1 and 2 respectively, and values of global Replication-IDs respectively corresponding to three P2MP trees whose root nodes are B are 3, 4, and 5 respectively. Alternatively, the value is a tree identifier (Tree identifier, Tree ID) of the P2MP tree, and the P2MP tree is identified by the address of the root node and the Tree ID together. For example, a first P2MP tree whose root node is A is identified by <Root=A, Tree ID=1>, and a second P2MP tree whose root node is B is identified by <Root=B, Tree ID=1>. It should be understood that one P2MP tree may be identified by a Tree ID and a root node together. The second identifier may be used by the leaf node to verify validity of the first request message.

In a possible implementation, the first request message includes time to live (time to live, TTL) or a hop limit (Hop Limit, HL), and values of the TTL and the HL are natural numbers. For example, the root node sets a value of the TTL to 255 and includes the value of the TTL in the first request message, so that the first request message is sent to the leaf node.

According to a fourth aspect, a point-to-multipoint P2MP tree connectivity detection method is provided. The method is applied to SR domain. The SR domain includes a P2MP tree. It may be understood that the P2MP tree is constructed by concatenating replication segments on nodes in SR domain. A second node is an intermediate replication node of the P2MP tree. The method includes: The second node receives a first request message sent by a first node. The second node determines a next-hop node of the second node based on replication branch information. The second node sends the first request message to the next-hop node.

In a possible implementation, the replication branch information includes a path from the second node to a downstream node of the P2MP tree. The second node determines the next-hop node based on an identifier of the path.

In a possible implementation, the replication branch information includes a segment identifier SID of a downstream node of the second node in the P2MP tree. The second node determines a SID of the next-hop node based on the SID of the downstream node. For example, the downstream node of the first node may be represented not only by a node SID of the node, but also by an adjacency SID, or by a SID list.

In a possible implementation, when a SID in the SID is an SRv6 SID, the SID of the next-hop node includes an IPv6 address of the next-hop node.

In a possible implementation, the first request message carries a first identifier. The first identifier is for identifying that the first request message is an OAM packet. For example, the first message is an echo request (Echo Request) packet.

In a possible implementation, the first identifier is a user datagram protocol (User Datagram Protocol, UDP) port number, for example, a UDP destination port number carried in the first request message.

In a possible implementation, the first request message further includes an address of a root node of the P2MP tree, and the address of the root node is for indicating a leaf node of the P2MP tree to send, based on the address of the root node, a response message in response to the first request message.

In a possible implementation, the first request message includes a second identifier, and the second identifier is for identifying the P2MP tree.

In a possible implementation, the second identifier is the address of the root node of the P2MP tree and/or one integer value. In an example, the second identifier is the address of the root node of the P2MP tree. In another example, the second identifier is one integer value. In still another example, the second identifier is a combination of the address of the root node of the P2MP tree and one integer value. For example, the integer value is a Replication-ID of a replication segment. Different P2MP trees of a same root node and different P2MP trees of different root nodes may be identified by globally unique Replication-IDs. For example, values of global Replication-IDs respectively corresponding to two P2MP trees whose root nodes are A are 1 and 2 respectively, and values of global Replication-IDs respectively corresponding to three P2MP trees whose root nodes are B are 3, 4, and 5 respectively. Alternatively, the value is a tree identifier (Tree identifier, Tree ID) of the P2MP tree, and the P2MP tree is identified by the address of the root node and the Tree ID together. For example, a first P2MP tree whose root node is A is identified by <Root=A, Tree ID=1>, and a second P2MP tree whose root node is B is identified by <Root=B, Tree ID=1>. It should be understood that one P2MP tree may be identified by a Tree ID and a root node together. The second identifier may be used by the leaf node to verify validity of the first request message.

In a possible implementation, the first request message includes TTL or a HL, and values of the TTL and the HL are natural numbers. For example, the root node sets a value of the TTL to 255 and includes the value of the TTL in the first request message, so that the first request message is sent to the leaf node.

According to a fifth aspect, a first node is provided, and is configured to perform the method in any one of the first aspect or the possible implementations of the first aspect. Specifically, the first node includes a unit configured to perform the method in any one of the first aspect or the possible implementations of the first aspect.

According to a sixth aspect, a leaf node is provided, and is configured to perform the method in any one of the second aspect or the possible implementations of the second aspect. Specifically, the leaf node includes a unit configured to perform the method in any one of the second aspect or the possible implementations of the second aspect.

According to a seventh aspect, a first node is provided, and is configured to perform the method in any one of the third aspect or the possible implementations of the third aspect. Specifically, the first node includes a unit configured to perform the method in any one of the third aspect or the possible implementations of the third aspect.

According to an eighth aspect, a second node is provided, and is configured to perform the method in any one of the fourth aspect or the possible implementations of the fourth aspect. Specifically, the second node includes a unit configured to perform the method in any one of the fourth aspect or the possible implementations of the fourth aspect.

According to a ninth aspect, a first node is provided. The first node includes a processor, a communication interface, and a memory. The communication interface is configured to receive or send a packet. The memory may be configured to store a program or code. The processor is configured to invoke the program or the code in the memory to perform the method in any one of the first aspect or the possible implementations of the first aspect. For details, refer to detailed descriptions in the method example. Details are not described herein again.

According to a tenth aspect, a leaf node is provided. The leaf node includes a processor, a communication interface, and a memory. The communication interface is configured to receive or send a packet. The memory may be configured to store a program or code. The processor is configured to invoke the program or the code in the memory to perform the method in any one of the second aspect or the possible implementations of the second aspect. For details, refer to detailed descriptions in the method example. Details are not described herein again.

According to an eleventh aspect, a first node is provided. The first node includes a processor, a communication interface, and a memory. The communication interface is configured to receive or send a packet. The memory may be configured to store a program or code. The processor is configured to invoke the program or the code in the memory to perform the method in any one of the third aspect or the possible implementations of the third aspect. For details, refer to detailed descriptions in the method example. Details are not described herein again.

According to a twelfth aspect, a second node is provided. The first node includes a processor, a communication interface, and a memory. The communication interface is configured to receive or send a packet. The memory may be configured to store a program or code. The processor is configured to invoke the program or the code in the memory to perform the method in any one of the fourth aspect or the possible implementations of the fourth aspect. For details, refer to detailed descriptions in the method example. Details are not described herein again.

According to a thirteenth aspect, a P2MP tree connectivity detection system is provided. The system includes a first node configured to perform the method in any one of the first aspect or the possible implementations of the first aspect and a leaf node configured to perform the method in any one of the second aspect or the possible implementations of the second aspect. For example, the first node is configured to: determine a first next-hop node of the first node based on replication branch information, and send a first request message to the first next-hop node. The first request message includes a SID of the first next-hop node. The first request message includes a first identifier. The first identifier indicates that the first request message is for connectivity detection. The leaf node is configured to: receive the first request message, where the first request message includes an address of a root node of a P2MP tree, and send a first response message to the root node based on the address of the root node.

According to a fourteenth aspect, a P2MP tree connectivity detection system is provided. A P2MP tree is in SR domain. The system includes a root node, an intermediate replication node, and a leaf node of the P2MP tree. The root node is configured to: determine, based on replication branch information, that a next-hop node of the root node is the intermediate replication node, send a first request message to the intermediate replication node, receive a first response message sent by the leaf node, and determine, based on the first response message, that a path from the root node to the leaf node is connected. The first request message includes a SID of the next-hop node. The first request message includes a first identifier. The first identifier indicates that the first request message is for connectivity detection. The intermediate replication node is configured to: receive the first request message, determine, based on the replication branch information, that a next-hop node is the leaf node, and send the first request message to the leaf node. The leaf node is configured to: receive the first request message, and send the first response message to the root node.

According to a fifteenth aspect, the system includes a first node configured to perform the method in any one of the third aspect or the possible implementations of the third aspect, and a second node configured to perform the method in any one of the fourth aspect or the possible implementations of the fourth aspect.

According to a sixteenth aspect, a computer-readable medium is provided, including instructions. When the instructions are executed on a computer, the computer is enabled to perform the method in any one of the first aspect or the possible implementations of the first aspect, the method in any one of the second aspect or the possible implementations of the second aspect, the method in any one of the third aspect or the possible implementations of the third aspect, or the method in any one of the fourth aspect or the possible implementations of the fourth aspect.

According to a seventeenth aspect, a computer program product including instructions is provided. When the computer program product runs on a computer, the computer is enabled to perform the method in any one of the first aspect or the possible implementations of the first aspect, the method in any one of the second aspect or the possible implementations of the second aspect, the method in any one of the third aspect or the possible implementations of the third aspect, or the method in any one of the fourth aspect or the possible implementations of the fourth aspect.

### BRIEF DESCRIPTION OF DRAWINGS

FIG. 1 is a schematic diagram of an application scenario of forwarding a packet in a P2MP tree according to this application;
FIG. 2 is a schematic diagram of another application scenario of forwarding a packet in a P2MP tree according to this application;
FIG. 3 is a schematic diagram of an application scenario of P2MP tree connectivity detection according to this application;
FIG. 4 is a schematic flowchart of a P2MP tree connectivity detection method according to this application;
FIG. 5 is a schematic diagram of a packet format of a request message according to this application;
FIG. 6 is a schematic flowchart of a P2MP tree connectivity detection method according to this application;
FIG. 7A and FIG. 7B are a schematic flowchart of another P2MP tree connectivity detection method according to this application;
FIG. 8 is a schematic diagram of a structure of a node according to this application;
FIG. 9 is a schematic diagram of a structure of another node according to this application;
FIG. 10 is a schematic diagram of a hardware structure of a node according to this application;
FIG. 11 is a schematic diagram of a hardware structure of another node according to this application; and
FIG. 12 is a schematic diagram of a structure of a P2MP tree connectivity detection system according to this application.

### DESCRIPTION OF EMBODIMENTS

A replication segment provides a method in which a node replicates a packet to a group of other nodes in segment routing domain (Segment Routing Domain). In SR domain, the replication segment is a logical segment that connects a replication node to a group of downstream nodes. The replication segment is a local segment instantiated by a replication node. The replication segment can be configured locally on a node or programmed by a path computation unit (path computation element, PCE). The replication segment is identified by using a 2-tuple <replication identifier (Replication-IDentifier, Replication-ID), node identifier (Node identifier, Node-ID)>. The Replication-ID is for identifying the replication segment. For example, the Replication-ID may be a 32-bit integer value, or may be extended based on a requirement. The Node-ID is an address of a node that instantiates the replication segment, for example, may be an IPv6 address of the replication node. Content of the replication segment includes a replication segment identifier (Replication Segment Identifier, Replication SID), a downstream node (Downstream Node), and a replication state (Replication State). The downstream node and the replication state of the replication segment may change with time. The replication state is a replication branch (branch) list pointing to the downstream node, and the replication branch list may also be referred to as replication branch information. Each replication branch can be abstracted as <Downstream Node, DownstreamReplication SID>. The Replication SID is a segment routing-multiprotocol label switching (Segment Routing-Multiprotocol Label Switching, SR-MPLS) label or an SRv6 SID, which is for identifying a replication segment on a forwarding plane. It may be understood that the replication branch reaching a specific downstream node may be represented by a Node SID or an adjacency SID of the node. Simply, the downstream node may be represented by a SID list (SID-list) or an SR policy. The SR policy specifies an explicit path from the replication node to the downstream node. It should be understood that the replication node replicates a packet and sends the packet to the downstream node based on the replication branch information. If the downstream node is an egress node, in other words, the downstream node does not need to continue to replicate the packet, for example, perform operation NEXT. For details about the replication segment, refer to descriptions in the draft-voyer-spring-sr-replication-segment-04.

The replication segment provides a construction module for a P2MP service. For example, replication segments on an ingress node (which may also be referred to as a root node of a P2MP tree), an intermediate node, and an egress node (which may also be referred to as a leaf node of the P2MP tree) are concatenated together to construct the P2MP tree. The ingress node, as the root node of the P2MP tree, replicates a packet and sends the packet to the egress node through one or more intermediate replication nodes. Therefore, different from a conventional IP multicast technology, this technology does not need to use a multicast group address as a destination address of the packet and establish a multicast forwarding tree and a multicast forwarding entry by using protocol independent multicast (Protocol Independent Multicast, PIM), so that this technology can reduce network load and improve packet forwarding efficiency, and point-to-multipoint transmission of the packet can be implemented by the P2MP tree in SR domain. An SR P2MP policy can be delivered by the PCE to instantiate the P2MP tree. The SR P2MP policy is identified by a 2-tuple <root (Root), tree identifier (Tree-identifier, Tree-ID)>. The Root is an address of a root node of the instantiated P2MP tree in the SR P2MP policy, for example, an IPv6 address of the root node. The Tree-ID is for uniquely identifying the Root. In an implementation, the P2MP tree may be established by using a control device, for example, by using a path computation element (path computation element, PCE). For a process of creating the P2MP, refer to related descriptions of the draft-voyer-pim-sr-p2mp-policy-02. Details are not described herein again.

However, currently, there is no method for detecting connectivity of an SR P2MP tree constructed by using a replication segment, and connectivity detection on the P2MP tree and a replication segment path associated with the P2MP tree cannot be implemented. For the foregoing technical problem, this application provides a P2MP tree connectivity detection method, and connectivity detection on a P2MP tree and a replication segment path associated with the P2MP tree is implemented according to the method.

Before the P2MP tree connectivity detection method is described, a method for forwarding a packet in a P2MP tree in SR domain is described by using an example, to facilitate understanding of the P2MP tree connectivity detection method.

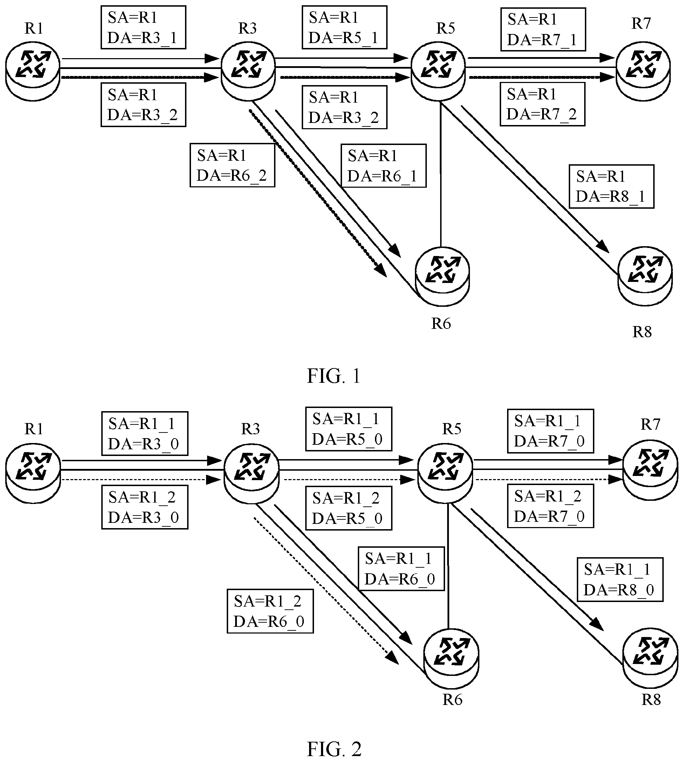

FIG. 1 is a schematic diagram of an application scenario of forwarding a packet in a P2MP tree. The P2MP tree is constructed by using a replication segment in SR domain. In FIG. 1, R1 is a root node of the P2MP tree, and is connected to an intermediate replication node R3. The intermediate replication node R3 is connected to an intermediate replication node R5 and a leaf node R6. The intermediate replication node R5 is connected to the leaf node R6, a leaf node R7, and a leaf node R8. In an implementation, when one P2MP tree needs to be established by using a replication segment in SR domain, a control device allocates a "Replication-ID" to identify the replication segment. For example, a value of the allocated Replication-ID is 1. The control device delivers a node replication branch (branch) list to each node in the P2MP tree. The list may also be referred to as replication branch information. The replication branch information of the node includes information about one or more downstream nodes. For example, each piece of the replication branch information may be abstracted as one <Downstream Node, Replication SID>. For example, branch=R3 indicates that one downstream node is R3, and branch=R5/R6 indicates that two downstream nodes are R5 and R6. In an implementation, the replication branch information may alternatively have no downstream node. It should be understood that this case indicates that the node is a leaf node or an egress node of the P2MP tree, and the node needs to decapsulate the received packet and then forward an inner-layer data packet. For example, replication branch information of a leaf node may be represented by Decap.

In FIG. 1, the nodes R1, R3, R5, R6, R7, and R8 have Node-IDs and Replication SIDs that respectively correspond to R1, R3, R5, R6, R7, and R8. Examples are as follows.

For R1, Node-ID is R1_0, and Replication SID is R1_1.

For R3, Node-ID is R3_0, and Replication SID is R3_1.

For R5, Node-ID is R5_0, and Replication SID is R5_1.

For R6, Node-ID is R6_0, and Replication SID is R6_1.

For R7, Node-ID is R7_0, and Replication SID is R7_1.

For R8, Node-ID is R8_0, and Replication SID is R8_1.

The nodes R1, R3, R5, R6, R7, and R8 obtain Node IDs, Replication-IDs, and replication branch information. The following describes the method for forwarding the packet in the P2MP tree by using an example in which the SID is an SRv6 SID. A value of Replication SID of each node may be an IPv6 address of each node. It should be understood that, in this case, replication branch information of each node includes a downstream node IPv6 address list, and the replication branch information may be represented by branch_IP. The nodes R1, R3, R5, R6, R7, and R8 respectively store entries shown in the following Table 1.

**Table 1**

| |
|---|
| R1: (DA=R1_1, branch_IP = R3_1); |
| R3: (DA=R3_1, branch_IP = R5_1/R6_1) |
| R5: (DA=R5_1, branch_IP = R7_1/R8_1) |
| R6: (DA=R6_1, branch_IP = Decap) |
| R7: (DA=R7_1, branch_IP = Decap) |
| R8: (DA=R8_1, branch_IP = Decap) |

In an implementation, the ingress node (the root node of the P2MP tree) R1 imports the packet into a corresponding P2MP tree based on content in Table 2 below, in other words, the ingress node encapsulates a P2MP tunnel header into the packet.

**Table 2**

| |
|---|
| R1: (vrf1, S1, G1, Replication-ID =1) // import a multicast group (vrf1, S1, G1) to a P2MP tunnel with Replication-ID=1 |

The configuration shown in Table 2 is delivered on the ingress node (the root node of the P2MP tree) R1, and in response to that, the ingress node R1 generates a forwarding entry of Table 3.

**Table 3**

| |
|---|
| R1: (vrf1, S1, G1, DA=R1_1) |

For example, when an interface belonging to the instance virtual routing forwarding (Virtual Routing Forwarding, VRF) 1 on the ingress node R1 receives a packet with the multicast address (S1, G1), the ingress node R1 encapsulates an IPv6 address of R1 into a P2MP tunnel header of the packet based on the forwarding entry shown in Table 3, where a source address is R1 (or may be any IP address on R1). The ingress node R1 searches the forwarding entry of DA=R1_1 in Table 1, and learns, based on the replication branch information, that the packet needs to be replicated to R3_1. The ingress node encapsulates a destination address of the packet as R3_1 and replicates the packet to the R3 node. After receiving the packet, the R3 node searches the forwarding entry of DA=R3_1 shown in Table 1, and learns, based on the replication branch information, that the packet needs to be replicated to downstream nodes R5_1 and R6_1. R3 replicates the packet and sends the packet to node R5 and node R6. The packet is finally sent to each leaf node of the P2MP tree, and each leaf node decapsulates the packet to obtain data in the packet.

Similarly, when a P2MP multicast tree identified by dashed lines shown in FIG. 1 needs to be established, a controller may allocate a "Replication-ID" to identify a replication segment. For example, Replication-ID=2 is allocated to the P2MP tree identified by the dashed lines, and the controller delivers replication branch information to each node of the multicast tree. This is shown in Table 4.

**Table 4**

| |
|---|
| R1: (Replication-ID =2, branch = R3); |
| R3: (Replication-ID =2, branch = R5/R6) |
| R5: (Replication-ID =2, branch = R7) |
| R6: (Replication-ID =2, branch = Decap) |
| R7: (Replication-ID =2, branch = Decap) |
| R8: (Replication-ID =2, branch = Decap) |

Forwarding entries that are of the P2MP identified by the dashed lines and that are generated on the nodes based on the information in Table 4 are shown in Table 5 below.

**Table 5**

| |
|---|
| R1: (DA=R1_2, branch IP = R3_2); |
| R3: (DA=R3_2, branch IP = R5_2/R6_2) |
| R5: (DA=R5_2, branch IP = R7_2) |
| R6: (DA=R6_2, branch IP = Decap) |
| R7: (DA=R7_2, branch_IP = Decap) |
| R8: (DA=R8_2, branch IP = Decap) |

Table 6 is a configuration for importing a multicast flow (vrf2, S2, G2) into the P2MP tree identified by the dashed lines on the ingress node (or referred to as the root node of the P2MP tree) R1.

**Table 6**

| |
|---|
| R1: (vrf2, S2, G2, Replication-ID =2) |

The configuration shown in Table 6 is delivered on the ingress node (or referred to as the root node of the P2MP tree) R1, and in response to that, the node R1 generates a forwarding entry of Table 7.

**Table 7**

| |
|---|
| R1: (vrf2, S2, G2, DA=R1_2) |

The ingress node R1 searches replication branch information based on the forwarding entries shown in Table 5 to determine a next-hop node, and replicates the packet to the next-hop node. The packet is sent to each leaf node based on the forwarding entries in Table 5 in sequence, and each leaf node decapsulates the packet to obtain the data in the packet.

FIG. 2 is a schematic diagram of another application scenario of forwarding a packet in a P2MP tree. The P2MP tree is constructed by using a replication segment in SR domain. In FIG. 2, R1 is a root node of the P2MP tree, and is connected to an intermediate replication node R3. The intermediate replication node R3 is connected to an intermediate replication node R5 and a leaf node R6. The intermediate replication node R5 is connected to the leaf node R6, a leaf node R7, and a leaf node R8. In an implementation, when a P2MP tree, whose root is R1, identified by solid lines, and shown in FIG. 2 needs to be established, a controller allocates an IP address R1_1 to R1, and delivers the R1_1 address and replication branch information on each node to each node in the P2MP tree. In another implementation, alternatively, a control plane message may allocate the IP address R1_1 to R1, and deliver the R1_1 address and replication branch information of a multicast tree on a node to each node in the P2MP tree.

In an implementation, when a plurality of P2MP trees whose roots are R1 are established, different IPv6 addresses are allocated to R1 to distinguish between different P2MP trees (for example, different IPv6 addresses may be allocated to each P2MP tree), and other nodes may not need to allocate an IPv6 address to each P2MP tree. For example, the intermediate node and the leaf node do not need to use different IPv6 addresses for each P2MP tree. For example, the controller delivers an R1 address corresponding to a P2MP tree and branch information of the P2MP tree to each node. The nodes R1, R3, R5, R6, R7, and R8 are configured with SIDs respectively as packet destination addresses. The SID identifies the node and identifies [Dst-Src searching and forwarding]. When a packet destination address received by a node is a SID of the node, the node performs Dst-Src searching and forwarding on the packet. The SIDs that are allocated to the nodes R1, R3, R5, R6, R7, and R8 and that indicate [Dst-Src searching and forwarding] are respectively R1_0, R3_0, R5_0, R6_0, R7_0 and R8_0.

The following table 8 is information about the P2MP tree identified by solid lines. The P2MP tree uses R1 as a root node, and tree is for identifying the root node R1. For example, the address R1_1 of R1 may be for identifying the root node R1. In another implementation, alternatively, tree may identify the P2MP tree together with the root node R1.

**Table 8**

| |
|---|
| R1: (tree=R1_1, branch = R3); |
| R3: (tree=R1_1, branch = R5/R6) |
| R5: (tree=R1_1, branch = R7/R8) |
| R6: (tree=R1_1, branch = Decap) |
| R7: (tree=R1_1, branch = Decap) |
| R8: (tree=R1_1, branch = Decap) |

Table 9 shows forwarding entries that are identified by solid lines and that are generated by the nodes R1, R3, R5, R6, R7, and R8, which include replication branch information branch IP of the nodes.

**Table 9**

| |
|---|
| R1: (SA=R1_1, branch_IP = R3_0); |
| R3: (SA=R1_1, branch_IP = R5_0/R6_0) |
| R5: (SA=R1_1, branch_IP = R7_0/R8_0) |
| R6: (SA=R1_1, branch_IP = Decap) |
| R7: (SA=R1_1, branch_IP = Decap) |
| R8: (SA=R1_1, branch_IP = Decap) |

Table 10 is a configuration for importing a multicast flow (vrf1, S1, G1) into the P2MP tree identified by the solid lines on the ingress node (or referred to as the root node of the P2MP tree).

**Table 10**

| |
|---|
| R1: (vrf1, S1, G1, tree=R1_1) |

The configuration shown in Table 2 is delivered on the ingress node (or referred to as the root node of the P2MP tree) R1, and in response to that, the node R1 generates a forwarding entry of Table 11.

**Table 11**

| |
|---|
| R1: (vrf1, S1, G1, SA=R1_1, DA=R1_0) |

For example, the ingress node R1 receives a multicast data packet (S1, G1) from an interface belonging to vrf1, encapsulates an outer IPv6 address of the multicast data packet as R1_1 and a destination address of the multicast data packet as R1 0 based on the forwarding entry in Table 11, and obtains an encapsulated packet. The ingress node R1 further searches the forwarding entry of DA=R1_0, obtains [Dst-Src searching and forwarding] indication information, and determines, based on the forwarding entries shown in Table 9, that replication branch information includes that a next hop is R3_0. The ingress node R1 changes the destination address of the packet to R3_0 and sends the packet to the R3 node. The node R3 receives the packet, searches a forwarding entry based on DA=R3_0, obtains [Dst-Src searching and forwarding] indication information, and determines that next hops are R5_0 and R6_0 respectively based on the replication branch information in the forwarding entries in Table 9. Therefore, the node R3 replicates the packet to the nodes R5 and R6. The node R5 receives the packet, searches a forwarding entry based on DA=R5_0, obtains [Dst-Src searching and forwarding] indication information, and determines that next hops are R7_0 and R8_0 based on the replication branch information in the forwarding entries shown in Table 9. The node R5 replicates the packet and sends the packet to the nodes R7 and R8. The node R6 receives the packet, searches the forwarding table based on DA=R6_0, obtains [Dst-Src searching and forwarding] indication information, and determines, based on the replication branch information in the forwarding entries in Table 9, that the node R6 is a leaf node of the P2MP tree and has no next hop. The node R6 decapsulates the packet to obtain the multicast data packet. Similarly, the nodes R7 and R8 receive the packet, and determine, based on the replication branch information in Table 9, that there is no next hop node. This indicates that the nodes R7 and R8 are leaf nodes of the P2MP tree. The nodes R7 and R8 decapsulate the packet to obtain the multicast data packet.

In an implementation, when a P2MP multicast tree, whose root is R1, identified by dashed lines, and shown in FIG. 2 needs to be established, a controller may allocate an IP address R1_2 to R1, and the controller separately delivers replication branch information to each node of the P2MP tree. Table 12 shows information about the P2MP tree identified by the dashed lines, includes an address of a root node and replication branch information of each node.

**Table 12**

| |
|---|
| R1: (tree=R1_2, branch = R3); |
| R3: (tree=R1_2, branch = R5/R6) |
| R5: (tree=R1_2, branch = R7) |
| R6: (tree=R1_2, branch = Decap) |
| R7: (tree=R1_2, branch = Decap) |
| R8: (tree=R1_2, branch = Decap) |

Table 13 shows forwarding entries that are identified by solid lines and that are generated by the nodes R1, R3, R5, R6, R7, and R8, which include replication branch information branch IP of the nodes.

**Table 13**

| |
|---|
| R1: (SA=R1_2, branch IP = R3_0); |
| R3: (SA=R1_2, branch IP = R5_0/R6_0) |
| R5: (SA=R1_2, branch IP = R7_0) |
| R6: (SA=R1_2, branch IP = Decap) |
| R7: (SA=R1_2, branch_IP = Decap) |
| R8: (SA=R1_2, branch_IP = Decap) |

Table 14 is a configuration for importing a multicast flow (vrf2, S2, G2) into the P2MP tree identified by the dashed lines on the ingress node (or referred to as the root node of the P2MP tree) R1.

**Table 14**

| |
|---|
| R1: (vrf2, S2, G2, tree=R1_2) |

The configuration shown in Table 14 is delivered on the ingress node (or referred to as the root node of the P2MP tree) R1, and in response to that, the node R1 generates a forwarding entry of Table 15.

**Table 15**

| |
|---|
| R1: (vrf2, S2, G2, SA=R1_2, DA=R1_0) |

For example, in FIG. 2, a process in which the ingress node imports a multicast data packet into a P2MP tunnel identified by a dashed line and the multicast data packet is forwarded through the P2MP tunnel identified by the dashed line is as follows. The ingress node R1 receives a multicast data packet (S2, G2) from an interface belonging to vrf2, encapsulates an outer IPv6 address of the multicast data packet as R1_2 and a destination address of the multicast data packet as R1_0 based on the forwarding entry in Table 15, and obtains a packet. The ingress node R1 further searches the forwarding entry of DA=R1_0, obtains [Dst-Src searching and forwarding] indication information, and determines, based on the forwarding entries in Table 13, that replication branch information includes that a next hop is R3_0. The ingress node R1 changes the destination address of the packet to R3_0 and sends the packet to the node R3. The node R3 receives the packet, searches a forwarding entry based on DA=R3_0, obtains [Dst-Src searching and forwarding] indication information, and determines, based on the forwarding entries shown in Table 13, that replication branch information includes that next hops are R5_0 and R6_0 respectively. The node R3 sends replication of the packet to the node R5 and the node R6. The node R5 receives the packet, searches the forwarding table based on DA=R5_0, obtains [Dst-Src searching and forwarding] indication information, and determines, based on the forwarding entries shown in Table 13, that next-hop nodes included in replication branch information are nodes R7_0 and R8_0 respectively. The R5 replicates the packet and sends the packet to the R7 and the R8. The node R6 receives the packet, searches the forwarding table based on DA=R6_0, obtains [Dst-Src searching and forwarding] indication information, and determines, based on the replication branch information in the forwarding entries in Table 13, that the node R6 is a leaf node of the P2MP tree and has no next hop. The node R6 decapsulates the packet to obtain the multicast data packet. Similarly, the nodes R7 and R8 receive the packet, and determine, based on the replication branch information in Table 13, that there is no next hop node. This indicates that the nodes R7 and R8 are leaf nodes of the P2MP tree. The nodes R7 and R8 decapsulate the packet to obtain the multicast data packet.

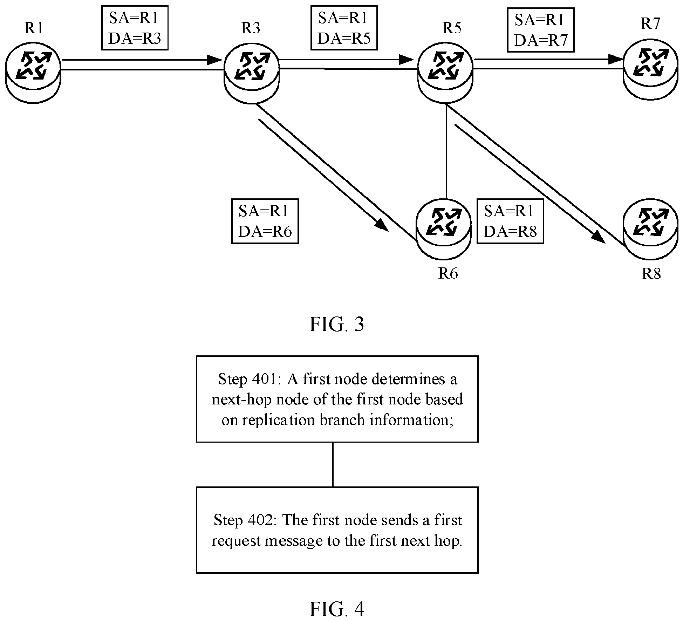

It should be understood that, the descriptions of forwarding the packet in the P2MP tree in FIG. 1 and FIG. 2 help understand the P2MP tree connectivity detection method. FIG. 3 is a schematic diagram of an application scenario of P2MP tree connectivity detection. FIG. 4 is a schematic flowchart of a P2MP tree connectivity detection method. The following describes the P2MP tree connectivity detection method with reference to FIG. 3 and FIG. 4. The method includes the following steps.

Step 401: A first node determines a first next-hop node of the first node based on replication branch information.

A P2MP tree to which the first node belongs is located in segment routing (segment routing, SR), and the P2MP tree in SR domain may be referred to as an SR P2MP tree. The SR P2MP tree is constructed by concatenating a group of replication segments. It may be understood that, in the SR P2MP, a replication segment at a root is concatenated with a replication segment of an intermediate replication node, and finally a leaf node is reached. In other words, the SR P2MP tree sends a packet from the root node to a group of leaf nodes through the intermediate replication node. The first node is a node in the P2MP tree, and the first node may be a root node of the P2MP tree, or may be an intermediate replication node of the P2MP tree.

It may be understood based on the descriptions in FIG. 1 and FIG. 2 that, the first node stores replication branch information of the SR P2MP tree to which the first node belongs, for example, the replication branch information branch IP shown in Table 1, Table 5, or Table 9. The replication branch information includes information about a downstream node represented by a SID list (SID-list) or an SR policy. For example, the downstream node of the first node may be represented not only by a node SID of the node, but also by an adjacency SID, or by a SID list. In an implementation, with information about a downstream node that is represented by an SR policy, the replication branch information includes a path from the first node to the downstream node, and the first next-hop node is a node on the path. It should be understood that the first node determines the first next-hop node based on an identifier of the path to the downstream node. In another implementation, the replication branch information includes a SID of a downstream node of the first node, and the SID includes a SID of the first next-hop node. It should be understood that the first node determines the SID of the first next-hop node based on the SID of the downstream node. If there are a plurality of next-hop nodes of the first node, the downstream nodes may be represented by a SID list. For example, the first node determines the node SID of the next-hop node based on the replication branch information of the P2MP tree to which the first node belongs. When a SID in the SID is a segment routing over IPv6 SRv6 SID, the SID of the first next-hop node includes an IPv6 address of the first next-hop node.

In an implementation, the first node determines a plurality of next-hop nodes based on the replication branch information, for example, determines two next-hop nodes, which are referred to as a first next-hop node and a second next-hop node. In this case, the first node determines a SID of the first next-hop node and a SID of the second next-hop node based on the replication branch information. A quantity of next-hop nodes is not limited in this application, and may be one, two, or any other quantity. In another implementation, the first node determines an adjacency SID of the first next-hop node and an adjacency SID of the second next-hop node based on the replication branch information.

Step 402: The first node sends a first request message to the first next-hop node.

The first request message includes the SID of the first next-hop node. The first request message includes a first identifier. The first identifier indicates that the first request message is for connectivity detection. It may also be understood that the first identifier indicates that the first request message is for fault detection on a data plane of the P2MP tree or connectivity check on the 2PMP tree. In an implementation, the first identifier is for identifying that the first request message is an operation, administration and maintenance (operation, administration and maintenance, OAM) packet. For example, the first identifier is a UDP port number carried in the first request message. In another implementation, the first request message further includes an address of the root node of the P2MP tree, and the address of the root node is for indicating the leaf node to send, based on the address of the root node, a response message in response to the first request message.

In an implementation, the first request message may further include a second identifier, and the second identifier is for identifying the P2MP tree. The second identifier includes the address of the root node of the P2MP tree and/or one integer value. In an example, the integer value may be a Replication-ID of a replication segment or a tree identifier Tree ID of the P2MP. In an example, the second identifier is the address of the root node, the second identifier may be a Replication-ID, or the second identifier may be a Tree ID. In another example, the second identifier is a combination of the address of the root node and the Replication-ID. In still another example, the second identifier is a combination of the address of the root node and the Tree ID. For example, the integer value may be a Replication-ID of a replication segment. Different P2MP trees of a same root node and different P2MP trees of different root nodes may be identified by globally unique Replication-IDs. For example, values of global Replication-IDs respectively corresponding to two P2MP trees whose root nodes are A are 1 and 2 respectively, and values of global Replication-IDs respectively corresponding to three P2MP trees whose root nodes are B are 3, 4, and 5 respectively. Alternatively, the value may be a tree identifier (Tree identifier, Tree ID) of the P2MP tree, and the P2MP tree is identified by the address of the root node and the Tree ID together. For example, a first P2MP tree whose root node is A is identified by <Root=A, Tree ID=1>, and a second P2MP tree whose root node is B is identified by <Root=B, Tree ID=1>. It should be understood that one P2MP tree is identified by a Tree ID and a root node together. The second identifier may further be used by the leaf node to verify validity of the first request message.

In an implementation, the first node is an intermediate replication node of the P2MP tree. In this case, the first node receives the first request message sent by the root node of the P2MP tree. Because connectivity from the root node of the P2MP tree to the leaf node of the P2MP tree needs to be detected, the first node sends the first request message to the leaf node of the P2MP tree according to the method described in FIG. 1 or FIG. 2 and based on the replication branch information.

In an implementation, the first node is a root node of the P2MP tree. In this case, the first node generates the first request message and sends the first request message to a next hop, and a node of the P2MP tree replicates the first request message to the leaf node according to the method described in FIG. 1 or FIG. 2 and based on the replication branch information.

For example, when the first request message is an echo request (Echo Request) packet, as shown in FIG. 3, a root node R1 of the P2MP tree generates an Echo Request packet and forwards the Echo Request packet through the P2MP tree. The Echo Request packet is forwarded to a leaf node R7. The leaf node R7 decapsulates the Echo Request packet and identifies the Echo Request packet. Similarly, after receiving the Echo Request packet, leaf nodes R6 and R8 decapsulate the Echo Request packet and identify the Echo Request packet.

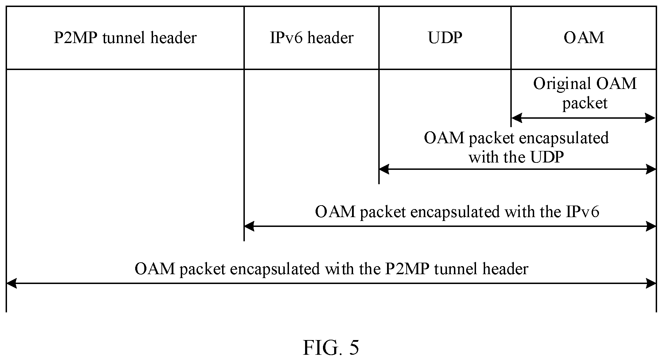

In an implementation, FIG. 5 is a schematic diagram of a packet format of a request message according to this application. The request message includes a P2MP tunnel header, a UDP header, and an OAM header. For example, the P2MP tunnel header may be an SR-MPLS label or an SRv6 SID. When the P2MP tunnel header is an SRv6 SID, a packet encapsulation P2MP tunnel header is an IPv6 address, and a destination address of an inner IPv6 header is an address (for example, 0:0:0:0:0:FFFF:7FOO: 1) in a 0:0:0:0:0:FFFF:7F00:0/104 address segment. A UDP port number may be for identifying that the request message is a connectivity detection packet. For example, the UDP port number uses 12345 to identify that the request message is an OAM packet. It should be understood that an outer IPv6 header is encapsulated on an outer layer of the request message, and the outer IPv6 header is for forwarding the request message in a P2MP tree. For example, a root node R1 sends the first request message to an intermediate replication node R3, and the first request message reaches leaf nodes R6, R7, and R8 through a P2MP forwarding path. The leaf nodes R6, R7, and R8, as egress nodes of the P2MP, decapsulate the outer IPv6 header of the first request message, determine, based on the UDP port number, that the first request message is an OAM packet for connectivity detection, and send response messages to the root node R1.

In an implementation, the first request message may carry an address of the root node of the P2MP tree, and the address of the root node is for indicating the leaf node to use the address as a destination address of the response message. The address of the root node may be different from or the same as a source address of the outer IPv6 header of the first request message.

In an implementation, the first request message may further carry a Replication-ID. For example, an inner OAM header of the first request message carries the Replication-ID. The leaf node may use the Replication-ID to verify validity of the first request message. When a Replication-ID value carried in the OAM header of the first request message is the same as a Replication-ID value of a control plane corresponding to the P2MP tree, it indicates that the first request message passes the verification, and the leaf node sends, based on a verification success result, a response message in response to the first request message, to implement verifying a data plane by the control plane. In another implementation, the first request message may further carry the address of the root node of the P2MP tree, that is, an address located in the outer IPv6 header. In other words, the outer IPv6 header of the first request message has one address of the root node that identifies the P2MP tree, and an inner layer of the first request message also includes a same IPv6 address. When the inner IPv6 address in the first request message is the same as the source address in the outer IPv6 header, it indicates that the first request message passes the verification, and the leaf node sends, based on a verification success result, a response message in response to the first request message.

It should be understood that the node in the P2MP tree forwards the first request message from the root node to the leaf node based on the replication branch information. The following further describes a method in which the leaf node receives the first request message and sends a first response message to the root node based on the address of the root node in the first request message.

In an implementation, when a first node in FIG. 4 is the root node of the P2MP tree, and a first next-hop node is the leaf node of the P2MP tree, the method shown in FIG. 4 further includes: In response to that the first node receives a first response message sent by the first next-hop node, the first node determines that a path from the first node to the first next-hop node is connected, where the first response message is a response message for the first request message. In another implementation, in response to that the first node does not receive a response message in response to the first request message, the first node determines that a path from the first node to the first next-hop node is disconnected.

In an implementation, when a first node in FIG. 4 is the root node of the P2MP tree, and a first next-hop node is the intermediate replication node of the P2MP tree, the method shown in FIG. 4 further includes: In response to that the first node receives a second response message that is sent by a leaf node on a path passing through the first next-hop node, the first node determines that the path that is from the first node to the leaf node and that passes through the first next-hop node is connected, where the second response message is a response message for the first request message. In another implementation, in response to that the first node does not receive a response message that is sent by a leaf node on a path passing through the first next-hop node and that is in response to the first request message, the first node determines that the path that is from the first node to the leaf node and that passes through the first next-hop node is disconnected.

For example, both the first request packet and the first response message are OAM packets, and the first request message is an Echo Request packet. As shown in FIG. 3, the root node R1 of the P2MP tree generates the first request message, which is an Echo Request packet, and replicates the Echo Request packet through the P2MP tree to the leaf nodes R6, R7, and R8. The leaf nodes R6, R7, and R8 separately receive and identify the Echo Request packet, and then separately send Echo Reply packets to the root node R1. The root node R1 determines, based on the received Echo Reply packets sent by the leaf nodes R6, R7, and R8, that paths from the root node R1 to the leaf nodes R6, R7, and R8 in the P2MP tree are all connected. It should be understood that, if a link between an intermediate replication node R5 and the leaf node R8 is faulty, the leaf node R8 cannot receive the Echo Request packet sent by the root node R1, and the root node R1 cannot receive the Echo Reply packet from the leaf node R8. In this case, the root node R1 may determine that a path that passes through the intermediate replication node R5 and that is to the leaf node R8 is disconnected.

In an implementation, the first response message includes an IPv6 header, a UDP header, and an OAM header. It may be understood that the first response message includes the address of the root node of the P2MP tree, and the first response message is sent based on the address of the root node. Therefore, the first response message may not be encapsulated with an outer IPv6 header as a P2MP tunnel header. For example, a destination address of an IPv6 header of the first response message is the address of the root node, and a source address of the first response message is an address of a sending node. In an example, the first response message uses a UDP port number to identify that the first response message is an OAM packet. A UDP source port number of the first response message may be the same as a destination port number of the first request packet, and a UDP destination port number of the first response message may be the same as a source port number of the first request packet.

In an implementation, before the leaf node sends the first response message to the root node of the P2MP tree, and after the leaf node receives the first request message, the leaf node verifies validity of the first request message based on a second identifier. The leaf node sends, in response to that validity verification of the leaf node on the second identifier succeeds, the first response message to the root node of the P2MP tree.

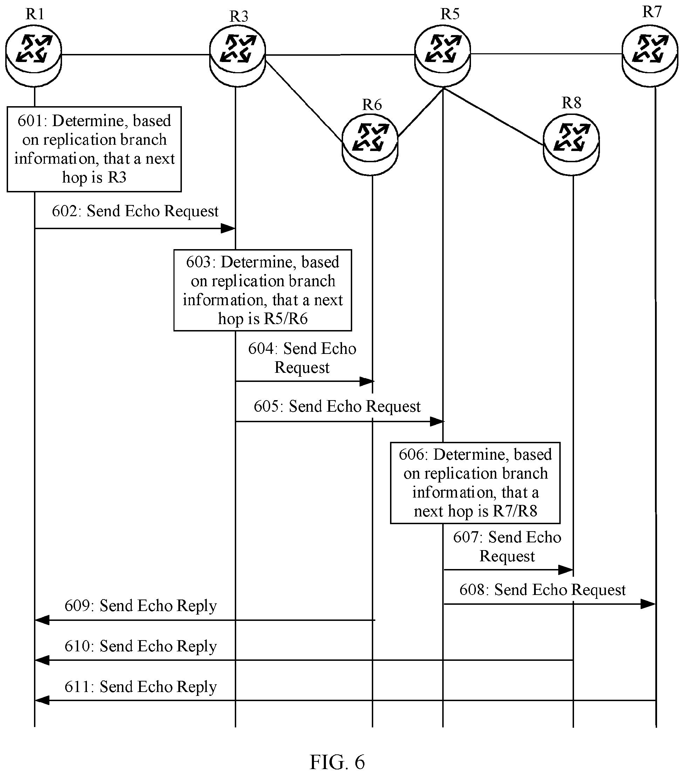

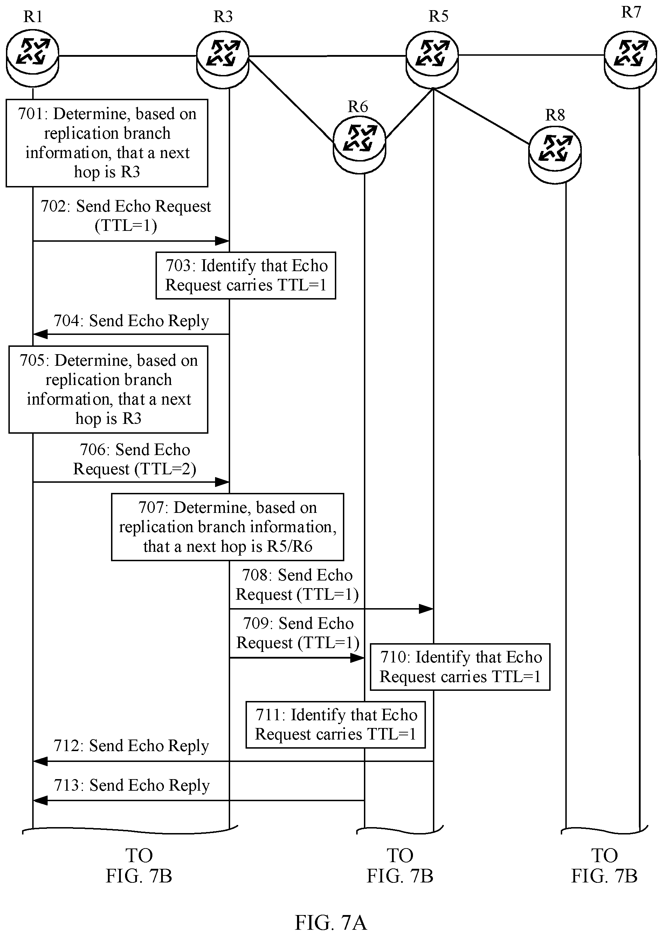

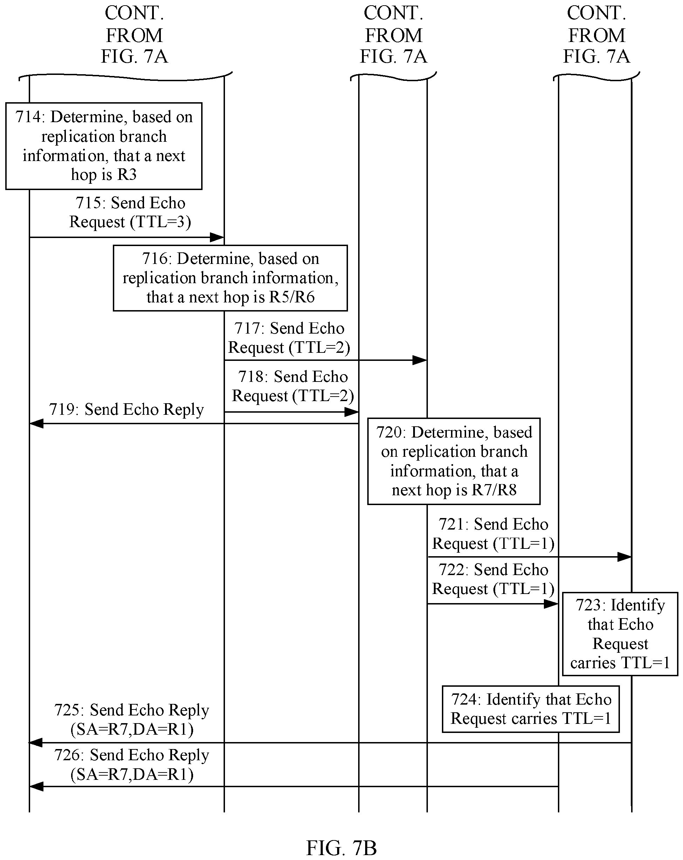

Ping is an important method to check whether a network path is connected. A Ping command may send an internet control message protocol (Internet Control Message Protocol, ICMP) echo request packet to a target node and wait for a target host to return an ICMP echo response packet. If a local device receives a response from the target node within a specific period of time, it indicates that a path from the local device to the target node is connected. If a local device does not receive a response from the target node within a specific period of time, it indicates that a path from the local device to the target node is disconnected, and connection cannot be established. Traceroute is another important method to check whether a network path is connected. Traceroute may send a UDP data packet and set an unreachable port in the UDP data packet. Depending on whether a returned ICMP packet is timeout or that the port is unreachable, the Traceroute program is determined whether to be ended. With reference to FIG. 6 and FIG. 7A and FIG. 7B, the following describes P2MP tree connectivity detection by using two implementations: Ping and Traceroute (Traceroute).

FIG. 6 is a schematic flowchart of a P2MP tree connectivity detection method according to this application. The method is described with reference to the network scenario shown in FIG. 3. The method includes the following steps.

Step 601: A root node R1 determines, based on replication branch information, that a next hop is an intermediate replication node R3.

The root node R1 determines a next-hop node according to the method for forwarding a packet in an SR P2MP tree in FIG. 1, FIG. 2, or FIG. 3. For example, a next hop of an Echo Request packet is determined based on a specific P2MP tree is to be detected. If connectivity of the P2MP tree with Replication-ID=1 in FIG. 1 is detected, replication branch information corresponding to Replication-ID=1 is determined by using a forwarding table of the device, and it may be determined that a next hop corresponding to Replication-ID=1 is the intermediate replication node R3. Therefore, the Echo Request packet is sent to the intermediate replication node R3. If connectivity detection is performed on the P2MP tree of SA=R1_1 in FIG. 2, a next hop is the intermediate replication node R3 by searching replication branch information of SA=R1_1. Therefore, the Echo Request packet is sent to the intermediate replication node R3.

Step 602: The root node R1 constructs the Echo Request packet and sends the Echo Request packet to the intermediate replication node R3.

The Echo Request packet constructed by the root node R1 includes an IPv6 header, a UDP header, and an OAM header. A destination address of the IPv6 header is an address in an address segment 0:0:0:0:0:FFFF:7F00:0/104. A destination port number of the UDP header may be for identifying the OAM header. In an example, a manner of encapsulating an outer IPv6 header of the Echo Request packet is an encapsulation manner corresponding to a P2MP tunnel based on an IPv6 unicast address, for example, a source address is R1, and a destination address is R3.

In an implementation, the Echo Request packet further includes a "reply packet address". The address may be an IPv6 address of the root node R1, and may be carried in a source address field of the IPv6 header of the Echo Request packet, or may be carried in a field of the OAM header. The "reply packet address" is used by a leaf node of the P2MP tree to feed back an Echo Reply packet to the root node based on the "reply packet address".

In an implementation, the Echo Request packet may further include an identifier for identifying the P2MP tree. The identifier is, for example, an address of the root node of the P2MP tree and/or one integer value. In an example, the integer value may be a Replication-ID of a replication segment or a tree identifier Tree ID of the P2MP. In an example, a second identifier is the address of the root node, the second identifier may be a Replication-ID, or the second identifier may be a Tree ID. In another example, the second identifier is a combination of the address of the root node and the Replication-ID. In still another example, the second identifier is a combination of the address of the root node and the Tree ID. For example, the integer value may be a Replication-ID of a replication segment. Different P2MP trees of a same root node and different P2MP trees of different root nodes may be identified by globally unique Replication-IDs. For example, values of global Replication-IDs respectively corresponding to two P2MP trees whose root nodes are A are 1 and 2 respectively, and values of global Replication-IDs respectively corresponding to three P2MP trees whose root nodes are B are 3, 4, and 5 respectively. Alternatively, the value may be a tree identifier (Tree identifier, Tree ID) of the P2MP tree, and the P2MP tree is identified by the address of the root node and the Tree ID together. For example, a first P2MP tree whose root node is A is identified by <Root=A, Tree ID=1>, and a second P2MP tree whose root node is B is identified by <Root=B, Tree ID=1>. It should be understood that one P2MP tree is identified by a Tree ID and a root node together.

In an implementation, a Replication-ID may be used by a node in the P2MP tree to verify validity of the Echo Request packet. A value of the Replication-ID may be carried in the OAM header of the Echo Request packet. In another implementation, the Echo Request packet may further include an outer IPv6 source address. The outer IPv6 source address is for verifying validity of the Echo Request packet. A field of the address may be in the IPv6 header of the Echo Request, or may be in the OAM header of the Echo Request.

Step 603: The intermediate replication node R3 determines, based on replication branch information, that next hops are R5 and R6 respectively.

The intermediate replication node R3 determines, according to the method for forwarding a packet in an SR P2MP tree described in FIG. 1, FIG. 2, or FIG. 3, and based on the replication branch information corresponding to Replication-ID=1, that the next hops are R5 and R6 respectively.

Step 604: The intermediate replication node R3 replicates the Echo Request packet to the intermediate replication node R6.

The intermediate replication node R3 replicates the packet to the intermediate replication node R6.

Step 605: The intermediate replication node R3 replicates the Echo Request packet to the leaf node R5.

The intermediate replication node R3 replicates the packet to the leaf node R5.

Step 606: The intermediate replication node R5 determines, based on replication branch information, that next hops are R7 and R8 respectively.

The intermediate replication node R5 determines, according to the method for forwarding a packet in an SR P2MP tree described in FIG. 1, FIG. 2, or FIG. 3, and based on the replication branch information corresponding to Replication-ID=1, that the next hops are R8 and R7 respectively.

Step 607: The intermediate replication node R5 replicates the Echo Request packet to the leaf node R8.

The intermediate replication node R5 replicates the Echo Request packet to the leaf node R8.

Step 608: The intermediate replication node R5 replicates the Echo Request packet to the leaf node R7.

The intermediate replication node R5 replicates the Echo Request packet to the leaf node R7.

Step 609: The leaf node R6 sends an Echo Reply packet to the root node R1.

The leaf node R6 receives the Echo Request packet, and determines, based on the outer IPv6 header and replication branch information, that there is no next hop which the packet needs to be forwarded to. Instead, the leaf node R6 decapsulates the Echo Request packet. After decapsulating the Echo Request packet, the leaf node R6 identifies that an inner layer of the Echo Request packet is an IPv6 packet, and an IPv6 destination address is an address in an address segment 0:0:0:0:0:FFFF:7F00:0/104. The leaf node R6 determines, based on an IPv6 UDP destination port in the Echo Request packet, that the packet is an Echo Request packet. Therefore, the leaf node R6 sends the Echo Reply packet to the root node R1.

In an implementation, before sending the Echo packet to R1, the leaf node R6 verifies validity of the Echo Request packet, and sends the Echo Reply packet after the verification succeeds. The leaf node of the P2MP tree receives the Echo Request packet and verifies the Echo Request packet. When a Replication-ID value carried in the OAM header of the Echo Request packet is the same as a Replication-ID value of a control plane corresponding to the P2MP tree, it indicates that the Echo Request packet passes the verification, and the leaf node sends, based on a verification success result, a response message in response to a first request message, to implement verifying a data plane by the control plane. Alternatively, the leaf node of the P2MP tree receives the Echo Request packet and checks whether an IPv6 address carried in the Echo Request packet for verification is the same as the source address of the outer IPv6 header of the Echo Request packet. If the IPv6 address carried in the Echo Request packet for verification is the same as the source address of the outer IPv6 header of the Echo Request packet, the verification succeeds.

In an implementation, before the leaf node R6 sends the Echo Reply packet to the root node R1, the leaf node R6 uses the "reply packet address" in the Echo Request as a destination address for sending the Echo Reply packet. If the Echo Request packet does not include the "reply packet address", the source address of the outer IPv6 header is used as a destination address for sending the Echo Reply packet.

Step 610: The leaf node R8 sends an Echo Reply packet to the root node R1.

For a specific implementation of sending, by the leaf node R8, the Echo Reply packet to the root node R1, refer to the implementation in step 609.

Step 611: The leaf node R7 sends an Echo Reply packet to the root node R1.

For a specific implementation of sending, by the leaf node R7, the Echo Reply packet to the root node R1, refer to the implementation in step 609.

It should be understood that the root node R1 determines, by receiving Echo Reply packets sent by the leaf nodes R6, R7, and R8, that paths from the root node R1 to the leaf nodes R6, R7, and R8 are all connected. If a path from the root node to the leaf node R7 is disconnected, the leaf node does not receive the Echo Request packet sent by the root node R1, and the leaf node R7 does not feed back the Echo Reply packet to the root node. Based on that the root node R1 does not receive the Echo Reply packet sent by the leaf node R7, the root node R1 may determine that the path from the root node R1 to the leaf node R7 or R8 is disconnected.

FIG. 7A and FIG. 7B are a schematic flowchart of another P2MP tree connectivity detection method according to this application. The method is described with reference to the scenario example diagram shown in FIG. 3. In the method, not only connectivity detection on a P2MP tree can be implemented, but also a fault location can be further detected. The method includes the following steps.
1. Steps 701 to 704 are a first round of detection of a root node R1.

Step 701: The root node R1 determines, based on replication branch information, that a next hop is R3.

The root node R1 determines a next-hop node according to the method for forwarding a packet in an SR P2MP tree in FIG. 1, FIG. 2, or FIG. 3. For example, a next hop that sends an Echo Request packet is determined based on a specific P2MP tree is to be detected. If connectivity of the P2MP tree corresponding to Replication-ID=1 in FIG. 1 is detected, replication branch information corresponding to Replication-ID=1 is determined by using a forwarding table of the device, and it may be determined that a next hop corresponding to Replication-ID=1 is the intermediate replication node R3. Therefore, the Echo Request packet is sent to the intermediate replication node R3. If connectivity detection is performed on the P2MP tree of SA=R1_1 in FIG. 2, a next hop is the intermediate replication node R3 by searching replication branch information of SA=R1_1. Therefore, the Echo Request packet is sent to the intermediate replication node R3.

Step 702: The root node R1 sends the Echo Request packet to the intermediate replication node R3, where the Echo Request packet carries TTL=1.

The root node R1 constructs the Echo Request packet, encapsulates an outer IPv6 header into the packet, and sets a value of a hop limit (Hop Limit, HL) or time to live (time to live, TTL) carried in the Echo Request packet to 1. The Echo Request packet includes an inner IPv6 header, a UDP header, and an OAM header. A destination address of the inner IPv6 header is an address in an address segment 0:0:0:0:0:FFFF:7F00:0/104. A port number of the UDP header may be for identifying the OAM header. In an example, a manner of encapsulating the outer IPv6 header of the Echo Request packet is an encapsulation manner corresponding to a P2MP tunnel based on an IPv6 unicast address, a source address is R1, and a destination address is R3.

In an implementation, the Echo Request packet further includes a "reply packet address". The address may be an IPv6 address of the root node R1, and may be carried in a source address field of the IPv6 header of the Echo Request packet, or may be carried in a field of the OAM header. The "reply packet address" is used by a leaf node of the P2MP tree to feed back an Echo Reply packet to the root node based on the "reply packet address".

In an implementation, the Echo Request packet may further include an identifier for identifying the P2MP tree. The identifier is, for example, an address of the root node of the P2MP tree and/or one integer value. In an example, the integer value may be a Replication-ID of a replication segment or a tree identifier Tree ID of the P2MP. In an example, a second identifier is the address of the root node, the second identifier may be a Replication-ID, or the second identifier may be a Tree ID. In another example, the second identifier is a combination of the address of the root node and the Replication-ID. In still another example, the second identifier is a combination of the address of the root node and the Tree ID. For example, the integer value may be a Replication-ID of a replication segment. Different P2MP trees of a same root node and different P2MP trees of different root nodes may be identified by globally unique Replication-IDs. For example, values of global Replication-IDs respectively corresponding to two P2MP trees whose root nodes are A are 1 and 2 respectively, and values of global Replication-IDs respectively corresponding to three P2MP trees whose root nodes are B are 3, 4, and 5 respectively. Alternatively, the value may be a tree identifier (Tree identifier, Tree ID) of the P2MP tree, and the P2MP tree is identified by the address of the root node and the Tree ID together. For example, a first P2MP tree whose root node is A is identified by <Root=A, Tree ID=1>, and a second P2MP tree whose root node is B is identified by <Root=B, Tree ID=1>. It should be understood that one P2MP tree is identified by a Tree ID and a root node together.

In an implementation, the Echo Request packet may further include a Replication-ID. The Replication-ID is used by a node in the P2MP tree to verify validity of the Echo Request packet. A value of the Replication-ID may be carried in the OAM header of the Echo Request packet. In another implementation, the Echo Request packet may further include an outer IPv6 source address. The outer IPv6 source address is for verifying validity of the Echo Request packet.

Step 703: The intermediate replication node R3 identifies TTL= 1 in the Echo Request packet.

The intermediate replication node R3 determines, based on TTL=1 in the Echo Request packet, that the Echo Request packet does not need to be forwarded to a downstream node. The intermediate replication node R3 parses the Echo Request packet, identifies that an inner packet is an Echo Request packet, and sends an Echo Reply packet to the root node R1.

Step 704: The intermediate replication node R3 sends the Echo Reply packet to the root node R1.

In an implementation, a first request message may further include the second identifier. The second identifier is for identifying the P2MP tree. The second identifier includes the address of the root node of the P2MP tree and/or one integer value. In an example, the integer value may be a Replication-ID of a replication segment or a tree identifier Tree ID of the P2MP. In an example, the second identifier is the address of the root node, the second identifier may be a Replication-ID, or the second identifier may be a Tree ID. In another example, the second identifier is a combination of the address of the root node and the Replication-ID. In still another example, the second identifier is a combination of the address of the root node and the Tree ID. For example, the integer value may be a Replication-ID of a replication segment. Different P2MP trees of a same root node and different P2MP trees of different root nodes may be identified by globally unique Replication-IDs. For example, values of global Replication-IDs respectively corresponding to two P2MP trees whose root nodes are A are 1 and 2 respectively, and values of global Replication-IDs respectively corresponding to three P2MP trees whose root nodes are B are 3, 4, and 5 respectively. Alternatively, the value may be a tree identifier (Tree identifier, Tree ID) of the P2MP tree, and the P2MP tree is identified by the address of the root node and the Tree ID together. For example, a first P2MP tree whose root node is A is identified by <Root=A, Tree ID=1>, and a second P2MP tree whose root node is B is identified by <Root=B, Tree ID=1>. It should be understood that one P2MP tree is identified by a Tree ID and a root node together.

In an implementation, the Echo Request packet further includes a "reply packet address". The address may be an IPv6 address of the root node R1, and may be carried in a source address field of the IPv6 header of the Echo Request packet, or may be carried in a field of the OAM header. The "reply packet address" is used by a leaf node of the P2MP tree to feed back an Echo Reply packet to the root node based on the "reply packet address".

It should be understood that, based on that the root node R1 receives, in the first round of detection, the Echo Reply packet sent by the intermediate replication node R3, it can be determined that a path from the root node R1 to the intermediate replication node R3 is connected and not faulty.

2. Steps 705 to 713 are a second round of detection of the root node R1.

Step 705: The root node R1 determines, based on replication branch information, that a next hop is R3.

For specific implementation, refer to the descriptions of step 701.

Step 706: The root node R1 sends an Echo Request packet to the intermediate replication node R3, where the Echo Request packet carries TTL=2.

For a specific implementation, refer to the descriptions of step 702. A difference is that a TTL value in the Echo Request packet is set to 2.

Step 707: The intermediate replication node R3 determines, based on replication branch information, that next hops are R5 and R6 respectively.

The intermediate replication node R3 receives the Echo Request packet, and decreases the TTL value carried in the Echo Request packet by 1 to obtain TTL=1.

The intermediate replication node R3 may determine, according to the method for forwarding a packet in an SR P2MP tree described in FIG. 1, FIG. 2, or FIG. 3, and based on the replication branch information of Replication-ID=1, that the next hops are R5 and R6 respectively.

Step 708: The intermediate replication node R3 sends the Echo Request packet to the intermediate replication node R5, where the Echo Request packet carries TTL=1.

Step 709: The intermediate replication node R3 sends the Echo Request packet to the leaf node R6, where the Echo Request packet carries TTL=1.

Step 710: The intermediate replication node R5 identifies TTL=1 in the Echo Request packet.

The intermediate replication node R5 determines, based on TTL=1 in the Echo Request packet, that the Echo Request packet does not need to be forwarded to a downstream node. The intermediate replication node R5 parses the Echo Request packet, identifies that an inner packet is an Echo Request packet, and sends an Echo Reply packet to the root node R1. In an example, the intermediate replication node R5 determines, based on an IPv6 UDP destination port in the Echo Request packet, that the packet is an OAM packet.

Step 711: The leaf node R6 identifies TTL=1 in the Echo Request packet.

The intermediate replication node R6 determines, based on TTL=1 in the Echo Request packet, that the Echo Request packet does not need to be forwarded to a downstream node. The intermediate replication node R6 parses the Echo Request packet, identifies that an inner packet is an Echo Request packet, and sends an Echo Reply packet to the root node R1.

Step 712: The intermediate replication node R5 sends the Echo Reply packet to the root node R1.

For an implementation, refer to the descriptions of step 704.

Step 713: The leaf node R6 sends an Echo Reply packet to the root node R1.

For an implementation, refer to the descriptions of step 704.

It should be understood that, based on that the root node R1 receives, in the second round of detection, the Echo Reply packet sent by the intermediate replication node R5 and the leaf node R6, it can be determined that a path that is from the root node R1 to the leaf node R6 and that passes through the intermediate replication node R5 is connected and not faulty. If the root node R1 does not receive the Echo Reply packet sent by the intermediate replication node R5 and the leaf node R6, and the root node R1 receives the Echo Reply packet sent by the intermediate replication node R3 in the first round of detection, it indicates that a path from the intermediate replication node R3 to the intermediate replication node R5 and a path from the intermediate replication node R3 to the leaf node R6 are disconnected. Therefore, a fault location is determined according to the foregoing method.

3. Steps 714 to 704 are a third round of detection of the root node R1.

Step 714: The root node R1 determines, based on replication branch information, that a next hop is R3.

For specific implementation, refer to the descriptions of step 701.

Step 715: The root node R1 sends an Echo Request packet to the intermediate replication node R3, where the Echo Request packet carries TTL=3.

For a specific implementation, refer to the descriptions of step 702. A difference is that a TTL value in the Echo Request packet is set to 3.

Step 716: The intermediate replication node R3 determines, based on replication branch information, that next hops are R5 and R6 respectively.

The intermediate replication node R3 receives the Echo Request packet, and decreases the TTL value carried in the Echo Request packet by 1 to obtain TTL=2.

The intermediate replication node R3 may determine, according to the method for forwarding a packet in an SR P2MP tree described in FIG. 1, FIG. 2, or FIG. 3, and based on the replication branch information corresponding to Replication-ID=1, that the next hops are R5 and R6 respectively.

Step 717: The root node R3 sends the Echo Request packet to the intermediate replication node R5, where the Echo Request packet carries TTL=2.

Step 718: The root node R3 sends the Echo Request packet to the leaf node R6, where the Echo Request packet carries TTL=2.

Step 719: The leaf node R6 sends an Echo Reply packet to the root node R1.

The leaf node R6 receives the Echo Request packet, and determines, based on the outer IPv6 header and replication branch information, to decapsulate the Echo Request packet. After decapsulating the Echo Request packet, R6 identifies that an inner layer of the Echo Request packet is an IPv6 packet, and an IPv6 destination address is an address in an address segment 0:0:0:0:0:FFFF:7F00:0/104, and determines that the packet is an OAM packet based on an IPv6 UDP destination port. The leaf node R6 sends an Echo Reply packet to the root node R1.

Step 720: The intermediate replication node R5 determines, based on replication branch information, that next hops are R7 and R8.

The intermediate replication node R5 may determine, according to the method for forwarding a packet in an SR P2MP tree described in FIG. 1, FIG. 2, or FIG. 3, and based on the replication branch information of Replication-ID=1, that the next hops are R8 and R7 respectively, and decrease the TTL value carried in the Echo Request packet by 1 to obtain final TTL=1.

Step 721: The intermediate replication node replicates the Echo Request packet to the leaf node R7, where the Echo Request packet carries TTL=1.

Step 722: The intermediate replication node replicates the Echo Request packet to the leaf node R8, where the Echo Request packet carries TTL=1.

Step 723: The leaf node R7 identifies TTL=1 in the Echo Request packet.

The intermediate replication node R7 determines, based on TTL=1 in the Echo Request packet, that the Echo Request packet does not need to be forwarded to a downstream node. The intermediate replication node R7 parses the Echo Request packet, identifies that an inner packet is an Echo Request packet, and sends an Echo Reply packet to the root node R1.

Step 724: The leaf node R8 identifies TTL=1 in the Echo Request packet.

The intermediate replication node R8 determines, based on TTL=1 in the Echo Request packet, that the Echo Request packet does not need to be forwarded to a downstream node. The intermediate replication node R8 parses the Echo Request packet, identifies that an inner packet is an Echo Request packet, and sends an Echo Reply packet to the root node R1.

Step 725: The leaf node R7 sends the Echo Reply packet to the root node R1.

For specific implementation, refer to the descriptions of step 704.

Step 726: The leaf node R8 sends the Echo Reply packet to the root node R1.

For specific implementation, refer to the descriptions of step 704.

It should be understood that, the third round of detection ends, and all leaf nodes return Echo Reply messages. Therefore, a path from the root node R1 to each leaf node is connected and not faulty.

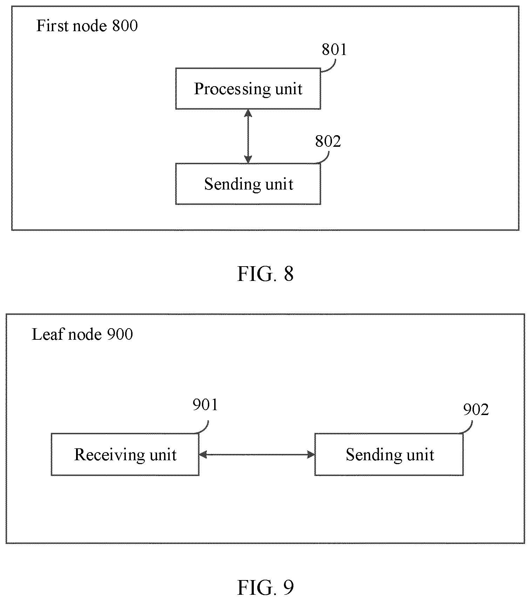

With reference to FIG. 1 to FIG. 8, the foregoing describes in detail the P2MP tree connectivity detection method provided in embodiments of this application. With reference to FIG. 8 to FIG. 12, the following describes in detail embodiments of an apparatus and a system in this application. It should be understood that the descriptions of the method embodiments correspond to descriptions of the apparatus embodiments. Therefore, for parts that are not described in detail, refer to the descriptions in the foregoing method embodiments.

FIG. 8 is a schematic diagram of a structure of a first node 800 according to an embodiment of this application. The first node 800 shown in FIG. 8 may perform corresponding steps performed by the first node, the root node, or the intermediate replication node in the methods shown in FIG. 1 to FIG. 7A and FIG. 7B in the foregoing embodiments. For example, the first node 800 may perform the method steps performed by the first node described in embodiments of steps 401 and 402 in FIG. 4. As shown in FIG. 8, the first node 800 includes a processing unit 801 and a sending unit 802. The processing unit 801 is configured to determine a first next-hop node of the first node based on replication branch information. The sending unit 802 is configured to send a first request message to the first next-hop node, where the first request message includes a SID of the first next-hop node, the first request message includes a first identifier, and the first identifier indicates that the first request message is for connectivity detection.

In an implementation, the first node is a root node of a P2MP tree, the first next-hop node is a leaf node of the P2MP tree, and the first node further includes a receiving unit.

The receiving unit is configured to receive a first response message sent by the first next-hop node.

The processing unit 801 is further configured to: in response to that the receiving unit receives the first response message, determine that a path from the first node to the first next-hop node is connected, where the first response message is a response message for the first request message.

In an implementation, the first node is a root node of a P2MP tree, the first next-hop node is a leaf node of the P2MP tree, and the first node includes a receiving unit.

The processing unit 801 is further configured to: in response to that the receiving unit does not receive a response message in response to the first request message, determine that a path from the first node to the first next-hop node is disconnected.

In an implementation, the first node is a root node of the P2MP tree, the first next-hop node is an intermediate replication node of the P2MP tree, and the first node further includes a receiving unit.

The receiving unit is configured to receive a second response message sent by the first next-hop node.

The processing unit 801 is further configured to: in response to that the receiving unit receives the second response message, determine that a path from the first node to a leaf node is connected, where the second response message is a response message for the first request message.

In an implementation, the first node is a root node of the P2MP tree, the first next-hop node is an intermediate replication node of the P2MP tree, and the first node further includes a receiving unit.

The processing unit 801 is further configured to: in response to that the receiving unit does not receive a response message in response to the first request message, determine that a path from the first node to the first next-hop node is disconnected.

In an implementation, the processing unit 801 is further configured to determine a second next-hop node of the first node based on the replication branch information.

The sending unit 802 is further configured to send a second request message to the second next-hop node, where the second request message includes a SID of the second next-hop node, and the second request message includes the first identifier.

In an implementation, the first identifier is for identifying that the first request message is an operation, administration and maintenance OAM packet.

In an implementation, the first identifier is a user datagram protocol UDP port number.

In an implementation, the first request message further includes an address of the root node of the P2MP tree, and the address of the root node is for indicating the leaf node of the P2MP tree to send, based on the address of the root node, the response message in response to the first request message.

In an implementation, the first request message includes a second identifier, and the second identifier is for identifying the P2MP tree.

In an implementation, the second identifier is the address of the root node of the P2MP tree or one integer value, or the second identifier may be a combination of the address of the root node of the P2MP tree and one integer value. In an example, the integer value may be a Replication-ID of a replication segment. Different P2MP trees of a same root node and different P2MP trees of different root nodes may be identified by globally unique Replication-IDs. For example, values of global Replication-IDs respectively corresponding to two P2MP trees whose root nodes are A are 1 and 2 respectively, and values of global Replication-IDs respectively corresponding to three P2MP trees whose root nodes are B are 3, 4, and 5 respectively. In another example, the value may be a tree identifier (Tree identifier, Tree ID) of the P2MP tree, and the P2MP tree is identified by the address of the root node and the Tree ID together. For example, a first P2MP tree whose root node is A is identified by <Root=A, Tree ID=1>, and a second P2MP tree whose root node is B is identified by <Root=B, Tree ID=1>. It should be understood that one P2MP tree is identified by a Tree ID and a root node together. The second identifier may be used by the leaf node to verify validity of the first request message.

A first node 900 shown in FIG. 9 may perform corresponding steps performed by the leaf node in the methods in the foregoing embodiments. For example, the leaf node 900 may perform the steps performed by the leaf node in FIG. 1 to FIG. 4, FIG. 6, and FIG. 7A and FIG. 7B. As shown in FIG. 9, the leaf node 900 includes a receiving unit 901 and a sending unit 902. The leaf node is a leaf node of a point-to-multipoint P2MP tree. The P2MP tree is in segment routing SR domain. The receiving unit 901 is configured to receive a first request message, where the first request message includes an address of a root node of the P2MP tree and a first identifier, and the first identifier indicates that the first request message is for connectivity detection. The sending unit 902 is configured to send a first response message to the root node based on the address of the root node.

In an implementation, the first identifier is for identifying that the first request packet is an operation, administration and maintenance OAM packet.

In an implementation, the first identifier is a user datagram protocol UDP port number.

In an implementation, the leaf node further includes a processing unit. The processing unit is configured to: before sending the first response message to the root node, and after receiving the first request message, verify validity of the first request message based on a second identifier. The sending unit 902 is further configured to: in response to that validity verification on the second identifier succeeds, send the first response message to the root node.

In a possible implementation, that the leaf node verifies validity of the first request message based on a second identifier includes: The leaf node verifies the validity of the first request message based on the second identifier carried in the first request message. That the validity verification on the second identifier succeeds includes: The leaf node determines that information about a control plane corresponding to the P2MP tree is consistent with the second identifier. The validity of the first request message can be verified by aligning the information about the control plane corresponding to the P2MP tree with the second identifier on a forwarding plane.

In an implementation, the second identifier is the address of the root node of the P2MP tree or one integer value. In an example, the integer value is a Replication-ID of a replication segment. For example, different P2MP trees of a same root node and different P2MP trees of different root nodes may be identified by globally unique Replication-IDs. In another example, the value is a tree identifier (Tree identifier, Tree ID) of the P2MP tree, and the P2MP tree is identified by the address of the root node and the Tree ID together. For example, a first P2MP tree whose root node is A is identified by <Root=A, Tree ID=1>, and a second P2MP tree whose root node is B is identified by <Root=B, Tree ID=1>. It should be understood that one P2MP tree is identified by a Tree ID and a root node together. The second identifier may be used by the leaf node to verify validity of the first request message.

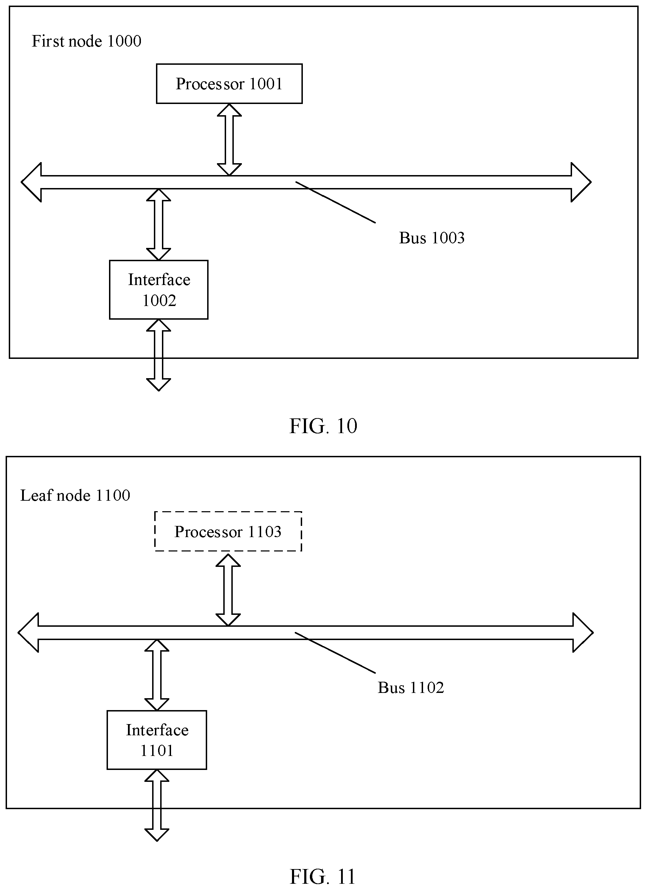

FIG. 10 is a schematic diagram of a hardware structure of a first node 1000 according to an embodiment of this application. The first node 1000 shown in FIG. 10 may perform corresponding steps performed by the first node, the root node, or the intermediate replication node in the methods shown in FIG. 1 to FIG. 7A and FIG. 7B in the foregoing embodiments. For example, the first node 800 may perform the method steps performed by the first node described in embodiments of steps 401 and 402 in FIG. 4. As shown in FIG. 11, the first node 1000 includes a processor 1001, an interface 1002, and a bus 1003. The processor 1001 is connected to the interface 1002 through the bus 1003.

In an implementation, the interface 1103 includes a transmitter and a receiver, configured to receive and send a packet between the first node 1000 and another node in the P2MP tree in the foregoing embodiment. As an example, the interface 1003 is configured to support step 402 in FIG. 4, steps 602, 604, 605, 607, and 608 in FIG. 6, and steps 702, 706, 708, 709, 715, 717, 718, 721, and 722 in FIG. 7A and FIG. 7B. The processor 1101 is configured to perform processing performed by the first node, the root node, or the intermediate replication node in the foregoing embodiments, and/or is configured to perform another process of the technology described in this specification. As an example, the processor 1001 is configured to determine, based on replication branch information, information about a next-hop node of the first node. As an example, the processor 1001 is configured to support step 401 in FIG. 4, steps 601, 603, and 606 in FIG. 6, and steps 701, 703, 705, 707, 710, 711, 714, and 716 in FIG. 7A and FIG. 7B.

In an implementation, the first node 1000 may further include a memory. The memory may be configured to store a program, code, or instructions. When executing the program, the code, or the instructions, the processor or a hardware device may complete a processing process related to the first device in the method embodiments. Optionally, the memory may include a read-only memory (Read-only Memory, ROM) and a random access memory (Random Access Memory, RAM). The ROM includes abasic input/output system (Basic Input/Output System, BIOS) or an embedded system, and the RAM includes an application program and an action system. When the first node 1000 needs to be run, the BIOS or a bootloader in the embedded system that is built into the ROM is used to lead a system to start, and lead the first node 1000 to enter a normal running state. After entering the normal running state, the first node 1000 runs the application program and the action system in the RAM, so as to complete a processing process related to the first node, the root node, or the intermediate replication node in the method embodiments. It may be understood that FIG. 10 shows only a simplified design of the first node 1000. In an actual application, the first node may include any quantity of interfaces, processors, or memories.

It should be understood that the processor may be a central processing unit (Central Processing Unit, CPU), or may be another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or a transistor logic device, a discrete hardware component, or the like. The general-purpose processor may be a microprocessor or any conventional processor or the like. It should be noted that the processor may be a processor that supports an advanced reduced instruction set computing machines (advanced RISC machines, ARM) architecture.

Further, in an optional embodiment, the memory may include a read-only memory and a random access memory, and provide instructions and data for the processor. The memory may further include a nonvolatile random access memory. For example, the memory may further store information of a device type.

The memory may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitation, many forms of RAMs may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

FIG. 11 is a schematic diagram of a hardware structure of a leaf node 1100 according to an embodiment of this application. The leaf node 1100 shown in FIG. 11 may perform corresponding steps performed by the leaf node in the methods in the foregoing embodiments. As shown in FIG. 11, the leaf node 1100 includes an interface 1101 and a bus 1102. In an implementation, the leaf node may further include a processor. The processor 1103 and the interface 1101 are connected through the bus 1102.

In an implementation, the interface 1101 includes a transmitter and a receiver, configured to receive and send a packet between the leaf node 1100 and another node in the P2MP tree in the foregoing embodiment. As an example, the interface 1101 is configured to support steps 609 to 611 in FIG. 6, and steps 709, 713, 719, 721, 722, 725, and 726 in FIG. 7A and FIG. 7B.

In an implementation, the processor 1103 is configured to perform processing performed by the leaf node in the foregoing embodiments, and/or is configured to perform another process of the technology described in this specification. As an example, the processor 1103 is configured to parse and identify a packet received by the interface 1101. As an example, the processor 1101 is configured to support steps 711, 723, and 724 in FIG. 7A and FIG. 7B.

In an implementation, the leaf node 1100 may further include a memory. The memory may be configured to store a program, code, or instructions. When executing the program, the code, or the instructions, the processor or a hardware device may complete a processing process related to the first device in the method embodiments. Optionally, the memory may include a ROM and a RAM. The ROM includes a BIOS or an embedded system, and the RAM includes an application program and an action system. When the leaf node 1100 needs to be run, the BIOS or a bootloader in the embedded system that is built into the ROM is used to lead a system to start, and lead the leaf node 1100 to enter a normal running state. After entering the normal running state, the leaf node 1100 runs the application program and the action system in the RAM, so as to complete a processing process related to the leaf node in the method embodiments. It may be understood that FIG. 11 shows only a simplified design of the leaf node 1100. In an actual application, the leaf node may include any quantity of interfaces, processors, or memories.

It should be understood that the processor may be a CPU, or may be another general-purpose processor, a DSP, an ASIC, an FPGA or another programmable logic device, a discrete gate or a transistor logic device, a discrete hardware component, or the like. The general-purpose processor may be a microprocessor or any conventional processor or the like. It should be noted that the processor may be a processor that supports an ARM architecture.

Further, in an optional embodiment, the memory may include a read-only memory and a random access memory, and provide instructions and data for the processor. The memory may further include a nonvolatile random access memory. For example, the memory may further store information of a device type.

The memory may be a volatile memory or a nonvolatile memory, or may include both a volatile memory and a nonvolatile memory. The nonvolatile memory may be a ROM, a PROM, an EPROM, an EEPROM, or a flash memory. The volatile memory may be a RAM, used as an external cache. By way of example but not limitation, many forms of RAMs may be used, for example, a SRAM, a DRAM, a SDRAM, a DDR SDRAM, an ESDRAM, a SLDRAM, and a DR RAM.

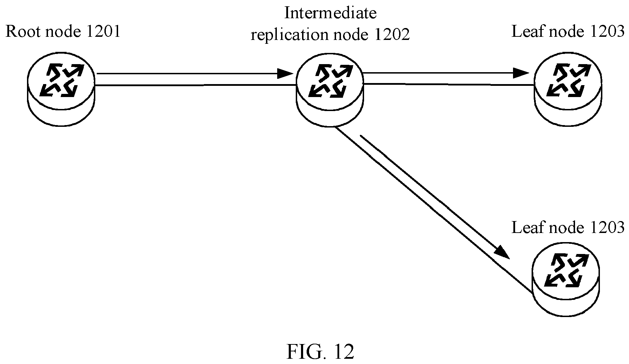

FIG. 12 is a schematic diagram of a structure of a P2MP tree connectivity detection system according to an embodiment of this application. The system 1200 is configured to implement the P2MP tree connectivity detection method in the foregoing method embodiments, and the P2MP tree is in segment routing SR domain. The system 1200 includes the first node for executing the foregoing implementation and the leaf node for executing the foregoing implementation. The first node may be a root node 1202 or an intermediate replication node 1202 in FIG. 12, and the leaf node is a leaf node 1203 in FIG. 12. For example, the first node may be configured to perform method steps of the first node or the intermediate replication node in FIG. 1 to FIG. 7A and FIG. 7B, and has corresponding functions. The leaf node is configured to perform the steps performed by the leaf node described in embodiments in FIG. 1 to FIG. 7A and FIG. 7B, and has corresponding functions.

In an implementation, the first node is configured to: determine a next-hop node of the first node based on replication branch information, and send a first request message to the next-hop node. The first request message includes a SID of the next-hop node. The first request message includes a first identifier. The first identifier indicates that the first request message is for connectivity detection. The leaf node is configured to: receive the first request message, where the first request message includes an address of a root node of a P2MP tree, and send a first response message to the root node based on the address of the root node.

In an implementation, the system includes the root node 1201, the intermediate replication node 1202, and the leaf node 1203 of the P2MP tree. The root node 1201 is configured to: determine, based on replication branch information, that a next-hop node of the root node is the intermediate replication node, send a first request message to the intermediate replication node, receive a first response message sent by the leaf node, and determine, based on the first response message, that a path from the root node to the leaf node is connected. The first request message includes a SID of the first next-hop node. The first request message includes a first identifier. The first identifier indicates that the first request message is for connectivity detection. The intermediate replication node 1202 is configured to: receive the first request message, determine, based on replication branch information, that a next-hop node is the leaf node, and send the first request message to the leaf node. The leaf node 1203 is configured to: receive the first request message, and send a first response message to the root node.

An embodiment of this application further provides a computer-readable storage medium, including at least one piece of instruction, a program or code. When the instruction, the program or the code is run on a computer, the computer is enabled to perform the step of any one of the foregoing methods for determining a bandwidth for transmitting a service flow. For example, corresponding method steps in the method embodiments performed by the first node, the root node, the intermediate replication node, or the leaf node in embodiments in FIG. 1 to FIG. 7A and FIG. 7B may be performed.

An embodiment of this application provides a computer program product, including at least one piece of instruction, program, or code. When the instruction, program, or code is loaded and run on a computer, the computer is enabled to perform corresponding method steps in the method embodiments performed by the first node, the root node, the intermediate replication node, or the leaf node in embodiments in FIG. 1 to FIG. 7A and FIG. 7B.

It should be noted that any apparatus embodiment described above is merely an example. The units described as separate parts may or may not be physically separate, and parts displayed as units may or may not be physical units, that is, may be located in one position, or may be distributed on a plurality of network units. Some or all the modules may be selected according to actual needs to achieve the objectives of the solutions of embodiments. In addition, in the accompanying drawings of embodiments of a first network node or a controller provided in this application, a connection relationship between the modules indicates that there is a communication connection between the modules, and the communication connection may be specifically implemented as one or more communication buses or signal cables. A person of ordinary skill in the art may understand and implement embodiments of the present invention without creative efforts.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on a computer, the procedure or functions according to embodiments of the present invention are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible to a computer or a data storage device, for example, a server or a data center, integrating one or more usable media. The usable medium may be a magnetic medium (for example, a floppy disk, a hard disk, or a magnetic tape), an optical medium (for example, DVD), a semiconductor medium (for example, a solid-state drive Solid State Disk (SSD)), or the like.

A person skilled in the art should be aware that in the foregoing one or more examples, functions described in embodiments of this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium, where the communication medium includes any medium that enables a computer program to be transmitted from one place to another. The storage medium may be any available medium accessible to a general-purpose or a dedicated computer.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

## Claims

1. A point-to-multipoint P2MP tree connectivity detection method, wherein the method is applied to segment routing SR domain, the SR domain comprises a P2MP tree, the P2MP tree comprises a first node, the first node is a root node or an intermediate replication node of the P2MP tree, and the method comprises:
determining, by the first node, a first next-hop node of the first node based on replication branch information; and
sending, by the first node, a first request message to the first next-hop node, wherein the first request message comprises a segment identifier SID of the first next-hop node, the first request message comprises a first identifier, and the first identifier indicates that the first request message is for connectivity detection.

2. The method according to claim 1, wherein the first node is a root node of the P2MP tree, the first next-hop node is a leaf node of the P2MP tree, and the method further comprises:
determining, by the first node in response to that the first node receives a first response message sent by the first next-hop node, that a path from the first node to the first next-hop node is connected, wherein the first response message is a response message for the first request message; or
determining, by the first node in response to that the first node does not receive a response message that is sent by the first next-hop node and that is in response to the first request message, that a path from the first node to the first next-hop node is disconnected.

3. The method according to claim 1, wherein the first node is a root node of the P2MP tree, the first next-hop node is an intermediate replication node of the P2MP tree, and the method further comprises:
determining, by the first node in response to that the first node receives a second response message that is sent by a leaf node on a path passing through the first next-hop node, that the path from the first node to the leaf node is connected, wherein the second response message is a response message for the first request message; or
determining, by the first node in response to that the first node does not receive a response message that is sent by a leaf node on a path passing through the first next-hop node and that is in response to the first request message, that the path from the first node to the leaf node is disconnected.

4. The method according to any one of claims 1 to 3, wherein the replication branch information comprises a path from the first node to a downstream node, and the first next-hop node is a node on the path; and
the determining, by the first node, a first next-hop node of the first node based on replication branch information comprises:
determining, by the first node, the first next-hop node based on an identifier of the path.

5. The method according to any one of claims 1 to 3, wherein the replication branch information comprises a segment identifier SID of a downstream node of the first node, and the SID of the downstream node comprises the SID of the first next-hop node; and
the determining, by the first node, a next-hop node of the first node based on replication branch information comprises:
determining, by the first node, the SID of the first next-hop node based on the SID of the downstream node.

6. The method according to claim 5, wherein when a SID in the SID is a segment routing over internet protocol version 6 IPv6 segment identifier SRv6 SID, the SID of the first next-hop node comprises an IPv6 address of the first next-hop node.

7. The method according to any one of claims 1 to 6, wherein the method further comprises:
determining, by the first node, a second next-hop node of the first node based on the replication branch information; and
sending, by the first node, a second request message to the second next-hop node, wherein the second request message comprises a SID of the second next-hop node, and the second request message comprises the first identifier.

8. The method according to any one of claims 1 to 7, wherein the first identifier is for identifying that the first request message is an operation, administration and maintenance OAM packet.

9. The method according to claim 8, wherein the first identifier is a user datagram protocol UDP port number.

10. The method according to any one of claims 1 to 9, wherein the first request message further comprises an address of the root node of the P2MP tree, and the address of the root node is for indicating the leaf node of the P2MP tree to send, based on the address of the root node, the response message in response to the first request message.

11. The method according to any one of claims 1 to 10, wherein the first request message comprises a second identifier, and the second identifier is for identifying the P2MP tree.

12. The method according to claim 11, wherein the second identifier is any one or more of the address of the root node of the P2MP tree, a replication identifier Replication-ID of a replication segment, and a tree identifier Tree ID of the P2MP tree.

13. The method according to any one of claims 1 to 12, wherein the first request message comprises time to live TTL or a hop limit HL, and values of the TTL and the HL are natural numbers.

14. A point-to-multipoint P2MP tree connectivity detection method, wherein the method is applied to segment routing SR domain, the SR domain comprises a P2MP tree, the P2MP tree comprises a leaf node, and the method comprises:
receiving, by the leaf node, a first request message, wherein the first request message comprises an address of a root node of the P2MP tree and a first identifier, and the first identifier indicates that the first request message is for connectivity detection; and
sending, by the leaf node, a first response message to the root node based on the address of the root node.

15. The method according to claim 14, wherein the first identifier is for identifying that the first request message is an operation, administration and maintenance OAM packet.

16. The method according to claim 15, wherein the first identifier is a user datagram protocol UDP port number.

17. The method according to any one of claims 14 to 16, wherein before the sending, by the leaf node, a first response message to the root node, and after the receiving, by the leaf node, a first request message, the method further comprises:
verifying, by the leaf node, validity of the first request message based on a second identifier; and
sending, by the leaf node in response to that validity verification on the second identifier succeeds, the first response message to the root node.

18. The method according to claim 17, wherein the second identifier comprises the address of the root node and/or a third identifier that identifies the P2MP tree.

19. The method according to claim 18, wherein the third identifier comprises a replication identifier Replication-ID of a replication segment or a tree identifier Tree ID of the P2MP tree.

20. The method according to any one of claims 17 to 19, wherein the verifying, by the leaf node, validity of the first request message based on a second identifier comprises:
verifying, by the leaf node, the validity of the first request message based on the second identifier carried in the first request message; and
that the validity verification on the second identifier succeeds comprises: determining, by the leaf node, that information about a control plane corresponding to the P2MP tree is consistent with the second identifier.

21. The method according to any one of claims 14 to 20, wherein the address of the root node is an internet protocol version 6 IPv6 address.

22. The method according to any one of claims 14 to 20, wherein the first request message comprises time to live TTL or a hop limit HL, and values of the TTL and the HL are natural numbers.

23. A first node, wherein the first node is a root node or an intermediate replication node of a point-to-multipoint P2MP tree, the P2MP tree is in segment routing SR domain, and the first node comprises:
a processing unit, configured to determine a first next-hop node of the first node based on replication branch information; and
a sending unit, configured to send a first request message to the first next-hop node, wherein the first request message comprises a segment identifier SID of the first next-hop node, the first request message comprises a first identifier, and the first identifier indicates that the first request message is for connectivity detection.

24. The first node according to claim 23, wherein the first node is a root node of the P2MP tree, the first next-hop node is a leaf node of the P2MP tree, and the first node further comprises a receiving unit, wherein
the receiving unit is configured to receive a first response message sent by the first next-hop node; and
the processing unit is further configured to: in response to that the receiving unit receives the first response message, determine that a path from the first node to the first next-hop node is connected, wherein the first response message is a response message for the first request message.

25. The first node according to claim 23, wherein the first node is a root node of the P2MP tree, the first next-hop node is a leaf node of the P2MP tree, and the first node further comprises a receiving unit, wherein
the processing unit is further configured to: in response to that the receiving unit does not receive a response message in response to the first request message, determine that a path from the first node to the first next-hop node is disconnected.

26. The first node according to claim 23, wherein the first node is a root node of the P2MP tree, the first next-hop node is an intermediate replication node of the P2MP tree, and the first node further comprises a receiving unit, wherein
the receiving unit is configured to receive a second response message sent by the first next-hop node; and
the processing unit is further configured to: in response to that the receiving unit receives the second response message, determine that a path from the first node to a leaf node is connected, wherein the second response message is a response message for the first request message.

27. The first node according to claim 23, wherein the first node is a root node of the P2MP tree, the first next-hop node is an intermediate replication node of the P2MP tree, and the first node further comprises a receiving unit, wherein
the processing unit is further configured to: in response to that the receiving unit does not receive a response message in response to the first request message, determine that a path from the first node to the first next-hop node is disconnected.

28. The first node according to any one of claims 23 to 27, wherein the processing unit is further configured to determine a second next-hop node of the first node based on the replication branch information; and
the sending unit is further configured to send a second request message to the second next-hop node, wherein the second request message comprises a SID of the second next-hop node, and the second request message comprises the first identifier.

29. The first node according to any one of claims 23 to 28, wherein the first identifier is for identifying that the first request message is an operation, administration and maintenance OAM packet.

30. The first node according to any one of claims 23 to 29, wherein the first identifier is a user datagram protocol UDP port number.

31. The first node according to any one of claims 23 to 30, wherein the first request message further comprises an address of the root node, and the address of the root node is for indicating the leaf node of the P2MP tree to send, based on the address of the root node, the response message in response to the first request message.

32. The first node according to any one of claims 23 to 31, wherein the first request message comprises a second identifier, and the second identifier is for identifying the P2MP tree.

33. The first node according to claim 32, wherein the second identifier is any one or more of the address of the root node of the P2MP tree, a replication identifier Replication-ID of a replication segment, and a tree identifier Tree ID of the P2MP tree.

34. A leaf node, wherein the leaf node is a leaf node of a point-to-multipoint P2MP tree, the P2MP tree is in segment routing SR domain, and the leaf node comprises:
a receiving unit, configured to receive a first request message, wherein the first request message comprises an address of a root node of the P2MP tree and a first identifier, and the first identifier indicates that the first request message is for connectivity detection; and
a sending unit, configured to send a first response message to the root node based on the address of the root node.

35. The leaf node according to claim 33, wherein the first identifier is for identifying that the first request message is an operation, administration and maintenance OAM packet.

36. The leaf node according to claim 34, wherein the first identifier is a user datagram protocol UDP port number.

37. The leaf node according to any one of claims 33 to 35, wherein the leaf node further comprises a processing unit, wherein
the processing unit is configured to: before sending the first response message to the root node, and after receiving the first request message, verify validity of the first request message based on a second identifier; and
the sending unit is further configured to: in response to that validity verification on the second identifier succeeds, send the first response message to the root node.

38. The leaf node according to claim 37, wherein the second identifier comprises the address of the root node and/or a third identifier that identifies the P2MP tree.

39. The leaf node according to claim 38, wherein the third identifier comprises a replication identifier Replication-ID of a replication segment or a tree identifier Tree ID of the P2MP tree.

40. A point-to-multipoint P2MP tree connectivity detection system, wherein the system comprises a P2MP tree, the P2MP tree is in segment routing SR domain, and the system comprises a root node, an intermediate replication node, and a leaf node of the P2MP tree, wherein
the root node is configured to: determine, based on first replication branch information, that a next-hop node of the root node is the intermediate replication node, send a first request message to the intermediate replication node, and in response to receiving a first response message sent by the leaf node, determine that a path from the root node to the leaf node is connected, wherein the first request message comprises a segment identifier SID of the intermediate replication node, the first request message comprises a first identifier, and the first identifier indicates that the first request message is for connectivity detection;
the intermediate replication node is configured to: receive the first request message, determine, based on second replication branch information, that a next-hop node is the leaf node, and send the first request message to the leaf node; and
the leaf node is configured to: receive the first request message, and send the first response message to the root node.

41. A computer-readable storage medium, comprising a computer program, wherein when the computer program is run on a computer, the computer is enabled to perform the method according to any one of claims 1 to 22.
